# EUROPEAN PATENT APPLICATION

(11) **EP 4 836 342 A1**
(43) Date of publication of application: **04.11.2026**
(21) Application number: 25738421.4
(22) Date of filing: 07.01.2025
(51) Int. Cl.: H04L 5/00

(54) **COMMUNICATION METHOD AND RELATED APPARATUS**

(30) Priority: 12.01.2024 CN 202410052435
(71) Applicant: Huawei Technologies Co., Ltd., Shenzhen, Guangdong 518129 (CN)
(72) Inventor: CHEN, Jiang, Shenzhen, Guangdong 518129 (CN); QIN, Qibo, Shenzhen, Guangdong 518129 (CN); CHEN, Shujing, Shenzhen, Guangdong 518129 (CN)
(74) Representative: Huawei European IPR
(86) International application number: PCT/CN2025/071120
(87) International publication number: WO 2025/148891

(57) **Abstract**

This application may be applied to the field of communication technologies, and provides a communication method and a related apparatus. In the technical solutions provided in this application, a first network element may send first information and second information to a second network element, where the first information indicates a multipath angle in a first channel map and/or a multipath delay in the first channel map, and the second information indicates a projection coefficient of a channel map basis in each channel sub-map in the first channel map. Correspondingly, after receiving the first information and the second information, the second network element may reconstruct the first channel map. This method helps reduce transmission overheads between the first network element and the second network element.

## Description

This application claims priority to Chinese Patent Application No. 202410052435.4, filed with the China National Intellectual Property Administration on January 12, 2024 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In a wireless communication system, channel detection may be performed between communication devices based on a channel map. The channel map is used to store channel characteristics of location information. The characteristics include a channel statistical covariance matrix, an angle spectrum, a delay spectrum, and the like. The channel statistical covariance matrix may indicate a map basis in the channel map, the angle spectrum indicates a multipath angle in the channel map, and the delay spectrum indicates a multipath delay in the channel map.

Before the channel detection is performed between the communication devices based on the channel map, channel map transmission needs to be performed. For example, a first network element may first obtain a channel map that needs to be transmitted, divide the channel map into a plurality of channel sub-maps, then project a channel map basis corresponding to each of the plurality of channel sub-maps onto a discrete Fourier transform (discrete Fourier transform, DFT) basis, to obtain a projection coefficient corresponding to the channel sub-map, and finally send information to a second network element, where the information indicates at least one non-zero value in the projection coefficient corresponding to each channel sub-map and an index of the at least one non-zero value. Correspondingly, after receiving the information, the second network element may reconstruct the channel map basis based on the information, and then perform channel detection based on the reconstructed channel map basis.

However, when the first network element and the second network element perform channel map transmission according to the method, transmission overheads between the first network element and the second network element are high.

### SUMMARY

This application provides a communication method and a related apparatus, to resolve a problem of high transmission overheads between a first network element and a second network element in a conventional technology.

According to a first aspect, this application provides a communication method, applied to a first network element. The method includes: obtaining a first channel map, where the first channel map includes a first channel sub-map and a second channel sub-map, a multipath angle in the first channel sub-map and a multipath angle in the second channel sub-map are equal to a first multipath angle, the first multipath angle is a multipath angle in the first channel map, a multipath delay in the first channel sub-map and a multipath delay in the second channel sub-map are equal to a first multipath delay, and the first multipath delay is a multipath delay in the first channel map; sending first information, where the first information indicates the first multipath angle and/or the first multipath delay; and sending second information, where the second information indicates a first projection coefficient and a second projection coefficient, the first projection coefficient is a projection coefficient of a channel map basis in the first channel sub-map, and the second projection coefficient is a projection coefficient of a channel map basis in the second channel sub-map.

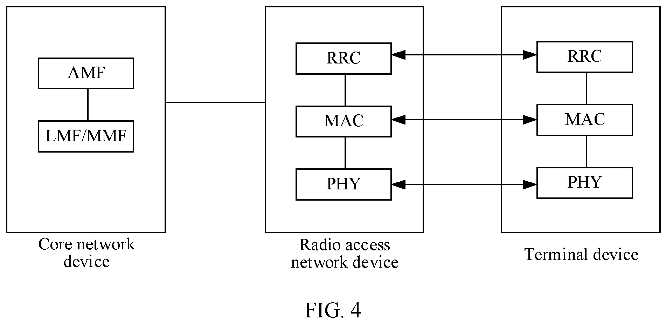

In an example, the first network element may be a core network device shown in FIG. 4. In this example, the first network element may construct the first channel map based on an LMF network element/MMF network element in the first network element.

In another example, the first network element may be a radio access network device shown in FIG. 4. In this example, the first network element may obtain the first channel map from a core network device.

In the method, the first channel map may be a to-be-transmitted channel map. The first network element may divide the first channel map based on a plurality of spatial grids, to obtain channel maps corresponding to the plurality of spatial grids. A channel map corresponding to each of the plurality of spatial grids may be referred to as a channel sub-map. In other words, the first channel map may include a plurality of channel sub-maps. Optionally, the first channel sub-map and the second channel sub-map may be any two of the plurality of channel sub-maps.

That the multipath angle in the first channel sub-map and the multipath angle in the second channel sub-map are equal to the first multipath angle may be understood as follows: The multipath angle in the first channel sub-map is the same as the multipath angle in the second channel sub-map, the multipath angle in the first channel sub-map is equal to the first multipath angle, and the multipath angle in the second channel sub-map is equal to the first multipath angle.

That the multipath delay in the first channel sub-map and the multipath delay in the second channel sub-map are equal to the first multipath delay may be understood as follows: The multipath delay in the first channel sub-map is the same as the multipath delay in the second channel sub-map, the multipath delay in the first channel sub-map is equal to the first multipath delay, and the multipath delay in the second channel sub-map is equal to the first multipath delay.

In the method, the first channel map may be a space domain channel map, a frequency domain channel map, a space-frequency channel map, or the like.

In the method, after receiving the first information and the second information, a second network element may reconstruct each channel sub-map based on a multipath angle and/or a multipath delay in any channel sub-map and a projection coefficient of a channel map basis in each channel sub-map, that is, reconstruct the first channel map. In the method, the first network element only needs to send the first multipath angle and/or the first multipath delay to the second network element, and does not need to send a multipath angle and/or a multipath delay in each channel sub-map. This helps reduce transmission overheads between the first network element and the second network element.

In addition, the projection coefficient sent by the first network element to the second network element may be a vector rather than a matrix, to reduce the transmission overheads between the first network element and the second network element.

In some possible implementations, that the second information indicates the first projection coefficient includes: The second information includes a non-zero value in the first projection coefficient and an index of the non-zero value in the first projection coefficient.

In the method, the index of the non-zero value in the first projection coefficient may indicate a location of the non-zero value in the first projection coefficient.

The first network element may first calculate the projection coefficient of the channel map basis in the first channel sub-map, where the first projection coefficient may include at least one non-zero value, and then send each of the at least one non-zero value and an index of the non-zero value to the second network element. In this way, the second network element may determine a location of each of the at least one non-zero value in the first projection coefficient based on the index of the non-zero value, to determine the first projection coefficient.

In the method, the first network element may send the non-zero value rather than all values in the first projection coefficient to the second network element. This helps reduce the transmission overheads.

In some possible implementations, that the second information indicates the second projection coefficient includes: The second information further includes a non-zero value in the second projection coefficient and an index of the non-zero value in the second projection coefficient.

In the method, the index of the non-zero value in the second projection coefficient may indicate a location of the non-zero value in the second projection coefficient.

The first network element may first calculate the projection coefficient of the channel map basis in the second channel sub-map, where the second projection coefficient may include at least one non-zero value, and then send each of the at least one non-zero value and an index of the non-zero value to the second network element. In this way, the second network element may determine a location of each of the at least one non-zero value in the second projection coefficient based on the index of the non-zero value, to determine the second projection coefficient.

In the method, the first network element may send the non-zero value rather than all values in the second projection coefficient to the second network element. This helps reduce the transmission overheads.

In some possible implementations, that the second information indicates the second projection coefficient includes: The second information further includes a non-zero value in a difference between the second projection coefficient and the first projection coefficient and an index of the non-zero value in the difference.

In the method, there may be a common subspace between the second channel sub-map and the first channel sub-map. In this case, the difference between the first projection coefficient and the second projection coefficient may be zero, or some elements in the difference may be zero, and a quantity of non-zero values in the difference may be less than a quantity of non-zero values in the second projection coefficient, so that a quantity of non-zero values sent by the first network element can be reduced. This helps reduce the transmission overheads.

In some possible implementations, the channel map basis in the first channel sub-map includes a common channel map basis and/or a first non-common channel map basis, the first projection coefficient includes a first subspace projection coefficient and/or a second subspace projection coefficient, the first subspace projection coefficient is a projection coefficient of the common channel map basis, and the second subspace projection coefficient is a projection coefficient of the first non-common channel map basis.

The common channel map basis is a common subspace between the channel map basis in the first channel sub-map and the channel map basis in the second channel sub-map, and a direct sum of the common channel map basis and the first non-common channel map basis is equal to the channel map basis in the first channel sub-map.

In some possible implementations, that the second information indicates the first projection coefficient includes: The second information includes a non-zero value in the first subspace projection coefficient, an index of the non-zero value in the first subspace projection coefficient, a non-zero value in the second subspace projection coefficient, and an index of the non-zero value in the second subspace projection coefficient.

In the method, the first network element may first calculate the first subspace projection coefficient and the second subspace projection coefficient, and then send the second information to the second network element. After receiving the second information, the second network element may determine the first subspace projection coefficient based on the non-zero value in the first subspace projection coefficient and the index of the non-zero value in the first subspace projection coefficient, and determine the second subspace projection coefficient based on the non-zero value in the second subspace projection coefficient and the index of the non-zero value in the second subspace projection coefficient, to restore the common channel map basis and the first non-common channel map basis based on the first subspace projection coefficient and the second subspace projection coefficient, and perform direct summation on the common channel map basis and the first non-common channel map basis to obtain the channel map basis in the first channel sub-map.

In some possible implementations, the channel map basis in the second channel sub-map includes the common channel map basis and/or a second non-common channel map basis, the second projection coefficient includes the first subspace projection coefficient and/or a third subspace projection coefficient, the third subspace projection coefficient is a projection coefficient of the second non-common channel map basis, and a direct sum of the common channel map basis and the second non-common channel map basis is equal to the channel map basis in the second channel sub-map.

That the second information indicates the second projection coefficient includes: The second information further includes a non-zero value in the third subspace projection coefficient and an index of the non-zero value in the third subspace projection coefficient.

In the method, the first network element may first calculate the third subspace projection coefficient, and then send the second information to the second network element. After receiving the second information, the second network element may determine the third subspace projection coefficient based on the non-zero value in the third subspace projection coefficient and the index of the non-zero value in the third subspace projection coefficient, to restore the common channel map basis and the second non-common channel map basis based on the first subspace projection coefficient and the third subspace projection coefficient, and perform direct summation on the common channel map basis and the second non-common channel map basis to obtain the channel map basis in the second channel sub-map.

In the method, the first subspace projection coefficient is a projection coefficient corresponding to the common subspace between the channel map basis in the first channel sub-map and the channel map basis in the second channel sub-map. The first network element may send the first subspace projection coefficient to the second network element only once. This helps reduce the transmission overheads.

In some possible implementations, the first channel sub-map is adjacent to the second channel sub-map.

In the method, the second channel sub-map is adjacent to the first channel sub-map. In this case, between the channel map basis in the first channel sub-map and the channel map basis in the second channel sub-map, there are a large quantity of elements in the common subspace, and there are a small quantity of elements in a non-common subspace. This helps further reduce the transmission overheads.

According to a second aspect, this application provides a communication method, applied to a second network element. The method may include: receiving first information, where the first information indicates a first multipath angle and/or a first multipath delay, the first multipath angle is a multipath angle in a first channel map, the first multipath angle is equal to a multipath angle in a first channel sub-map in the first channel map and a multipath angle in a second channel sub-map in the first channel map, the first multipath delay is a multipath delay in the first channel map, and the first multipath delay is equal to a multipath delay in the first channel sub-map and a multipath delay in the second channel sub-map; receiving second information, where the second information indicates a first projection coefficient and a second projection coefficient, the first projection coefficient is a projection coefficient of a channel map basis in the first channel sub-map, and the second projection coefficient is a projection coefficient of a channel map basis in the second channel sub-map; reconstructing an array vector and/or a subcarrier vector based on the first information; and reconstructing the channel map basis in the first channel sub-map and the channel map basis in the second channel sub-map based on the second information.

In some possible implementations, that the second information indicates the first projection coefficient includes: The second information includes a non-zero value in the first projection coefficient and an index of the non-zero value in the first projection coefficient.

In some possible implementations, that the second information indicates the second projection coefficient includes: The second information further includes a non-zero value in the second projection coefficient and an index of the non-zero value in the second projection coefficient.

In some possible implementations, that the second information indicates the second projection coefficient includes: The second information further includes a non-zero value in a difference between the second projection coefficient and the first projection coefficient and an index of the non-zero value in the difference.

The method further includes: determining the second projection coefficient based on the first projection coefficient, the non-zero value in the difference, and the index of the non-zero value in the difference; and reconstructing the channel map basis in the second channel sub-map based on the second projection coefficient.

In some possible implementations, the channel map basis in the first channel sub-map includes a common channel map basis and/or a first non-common channel map basis, the first projection coefficient includes a first subspace projection coefficient and/or a second subspace projection coefficient, the first subspace projection coefficient is a projection coefficient of the common channel map basis, and the second subspace projection coefficient is a projection coefficient of the first non-common channel map basis.

The common channel map basis is a common subspace between the channel map basis in the first channel sub-map and the channel map basis in the second channel sub-map, and a direct sum of the common channel map basis and the first non-common channel map basis is equal to the channel map basis in the first channel sub-map.

In some possible implementations, that the second information indicates the first projection coefficient includes: The second information includes a non-zero value in the first subspace projection coefficient, an index of the non-zero value in the first subspace projection coefficient, a non-zero value in the second subspace projection coefficient, and an index of the non-zero value in the second subspace projection coefficient.

The reconstructing the channel map basis in the first channel sub-map based on the second information includes: determining the first subspace projection coefficient based on the non-zero value in the first subspace projection coefficient and the index of the non-zero value in the first subspace projection coefficient; reconstructing the common channel map basis based on the first subspace projection coefficient; determining the second subspace projection coefficient based on the non-zero value in the second subspace projection coefficient and the index of the non-zero value in the second subspace projection coefficient; reconstructing the first non-common channel map basis based on the second subspace projection coefficient; and determining the channel map basis in the first channel sub-map based on the common channel map basis and the first non-common channel map basis.

In some possible implementations, the channel map basis in the second channel sub-map includes the common channel map basis and/or a second non-common channel map basis, the second projection coefficient includes the first subspace projection coefficient and/or a third subspace projection coefficient, the third subspace projection coefficient is a projection coefficient of the second non-common channel map basis, and a direct sum of the common channel map basis and the second non-common channel map basis is equal to the channel map basis in the second channel sub-map.

That the second information indicates the second projection coefficient includes: The second information further includes a non-zero value in the third subspace projection coefficient and an index of the non-zero value in the third subspace projection coefficient.

The reconstructing the channel map basis in the second channel sub-map based on the second information includes: determining the third subspace projection coefficient based on the non-zero value in the third subspace projection coefficient and the index of the non-zero value in the third subspace projection coefficient; reconstructing the second non-common channel map basis based on the third subspace projection coefficient; and determining the channel map basis in the second channel sub-map based on the common channel map basis and the second non-common channel map basis.

In some possible implementations, the first channel sub-map is adjacent to the second channel sub-map.

According to a third aspect, this application provides a communication apparatus, including a module or a unit configured to implement the method according to any one of the first aspect and the possible implementations of the first aspect. It should be understood that each module or unit may implement a corresponding function by executing a computer program.

According to a fourth aspect, this application provides a communication apparatus, including a module or a unit configured to implement the method according to any one of the second aspect and the possible implementations of the second aspect. It should be understood that each module or unit may implement a corresponding function by executing a computer program.

According to a fifth aspect, this application provides a communication apparatus, including a processor. The processor is configured to perform the method according to any one of the possible implementations of the first aspect or the second aspect.

The apparatus may further include a memory configured to store instructions and data. The memory is coupled to the processor, and when executing the instructions stored in the memory, the processor may implement the method described in the foregoing aspects. The apparatus may further include a communication interface. The communication interface is used by the apparatus to communicate with another device. For example, the communication interface may be a transceiver, a circuit, a bus, a module, or another type of communication interface.

According to a sixth aspect, this application provides a computer-readable storage medium. The computer-readable medium stores program code to be executed by an apparatus, and the program code includes instructions for implementing the method according to any one of the possible implementations of the first aspect or the second aspect.

According to a seventh aspect, this application provides a computer program product including instructions. When the computer program product runs on an apparatus, the apparatus is caused to implement the method according to any one of the possible implementations of the first aspect or the second aspect.

It may be understood that, for effects that can be obtained in the second aspect to the seventh aspect, refer to the descriptions in the first aspect. Details are not described herein again.

### BRIEF DESCRIPTION OF DRAWINGS

FIG. 1 is a diagram of a communication system applicable to an embodiment of this application;
FIG. 2 is a diagram of an example of a channel map;
FIG. 3 is a diagram of a channel map construction method;
FIG. 4 is a diagram of a structure of a communication device according to an embodiment of this application;
FIG. 5 is a schematic flowchart of a communication method according to an embodiment of this application;
FIG. 6 is a diagram of a base station array;
FIG. 7 is a diagram of layered transmission according to an embodiment of this application;
FIG. 8 is a schematic flowchart of a communication method according to an embodiment of this application;
FIG. 9 is a diagram of a first channel map according to this application;
FIG. 10 is a diagram of a method in which a first network element calculates a projection coefficient of a channel map basis in each channel sub-map in a first channel map according to an embodiment of this application;
FIG. 11 is a diagram of a method in which a second network element reconstructs a first channel map according to an embodiment of this application;
FIG. 12 is a schematic flowchart of a communication method according to another embodiment of this application;
FIG. 13 is a diagram of a method in which a first network element calculates a difference between a projection coefficient of a channel map basis in a target channel sub-map and a projection coefficient of a channel map basis in each of other channel sub-maps in a first channel map according to an embodiment of this application;
FIG. 14 is a diagram of a method in which a second network element reconstructs a first channel map according to another embodiment of this application;
FIG. 15 is a schematic flowchart of a communication method according to still another embodiment of this application;
FIG. 16 is a diagram of a method in which a first network element calculates projection coefficients of common subspaces and projection coefficients of non-common subspaces between a channel map basis in a target channel sub-map and channel map bases in other channel sub-maps in a first channel map according to an embodiment of this application;
FIG. 17 is a diagram of a method in which a second network element reconstructs a first channel map according to still another embodiment of this application;
FIG. 18 is a diagram of a communication apparatus according to an embodiment of this application;
FIG. 19 is a diagram of a communication apparatus according to another embodiment of this application; and
FIG. 20 is a diagram of a communication apparatus according to still another embodiment of this application.

### DESCRIPTION OF EMBODIMENTS

The following describes the technical solutions in embodiments of this application with reference to the accompanying drawings in embodiments of this application.

For ease of clearly describing the technical solutions in embodiments of this application, terms such as "first" and "second" are used in embodiments of this application to distinguish between same items or similar items that have basically same functions and purposes. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of multiple items (pieces). For example, at least one of a, b, or c may represent a, b, c, a and b, a and c, b and c, or a, b, and c. a, b, and c may be singular or plural.

A communication method in embodiments of this application may be applied to a communication system. There are at least two entities in the communication system. One entity needs to send transmission direction indication information, and the other entity needs to receive the indication information, and determine a transmission direction within specific time based on the indication information. In an example, the communication system may include a long term evolution (long term evolution, LTE) system, a 5th generation (5th generation, 5G) communication system or a new radio (new radio, NR) system, a non-terrestrial network (non-terrestrial network, NTN) system, and a future communication system like a 6th generation (6th generation, 6G) communication system. This is not limited in the present invention.

The following describes in detail embodiments of this application with reference to the accompanying drawings.

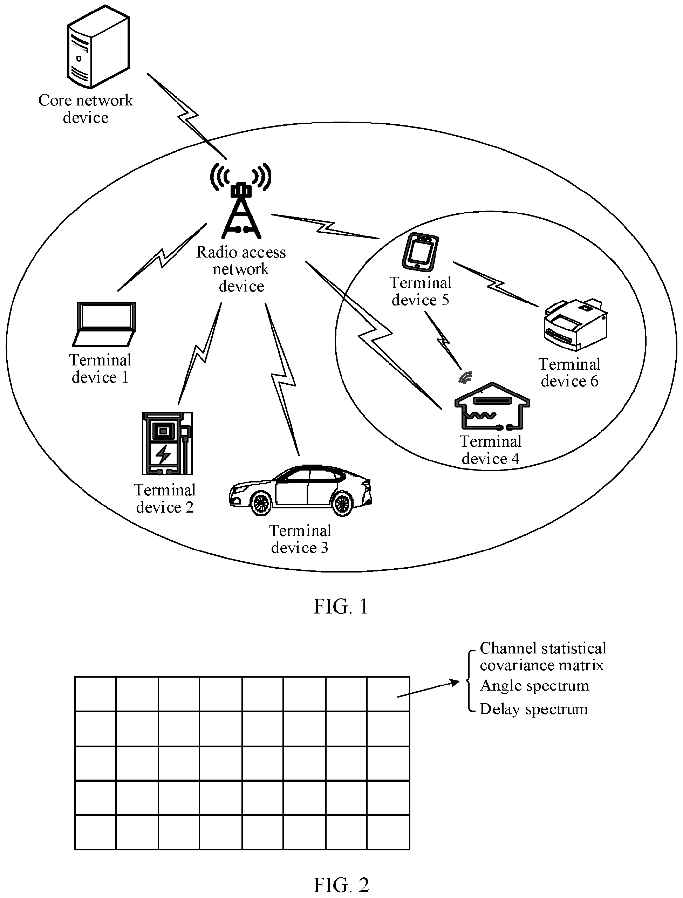

For ease of understanding embodiments of this application, a communication system applicable to embodiments of this application is first described with reference to FIG. 1. As shown in FIG. 1, the communication system includes a network device and a terminal device.

The technical solutions provided in embodiments of this application may be applied to wireless communication between communication devices. The wireless communication between the communication devices may include wireless communication between the network device and the terminal device, wireless communication between network devices, and wireless communication between terminal devices. In embodiments of this application, the term "wireless communication" may also be referred to as "communication" for short, and the term "communication" may alternatively be described as "data transmission", "information transmission", "transmission", or the like. In embodiments of this application, the communication device may also be referred to as a network element.

In embodiments of this application, the network device is an entity configured to transmit or receive a signal. The network device may include a radio access network (radio access network, RAN) device and a core network device.

The terminal device may be connected to the radio access network device in a wireless manner, and the radio access network device may be connected to the core network device in a wireless or wired manner. The core network device and the radio access network device may be different independent physical devices. Alternatively, functions of the core network device and logical functions of the radio access network device may be integrated into a same physical device. Alternatively, some functions of the core network device and some functions of the radio access network device may be integrated into one physical device. Terminal devices may be connected to each other in a wired or wireless manner, and radio access network devices may be connected to each other in a wired or wireless manner. Optionally, the communication system may further include other network devices, for example, may further include a wireless relay device and a wireless backhaul device that are not drawn in FIG. 1.

The terminal device may also be referred to as a terminal, user equipment (user equipment, UE), a mobile station (mobile station, MS), a mobile terminal (mobile terminal, MT), or the like, and may be an entity on a user side configured to receive or transmit a signal, for example, a mobile phone. The terminal device includes a handheld device, a vehicle-mounted device, a wearable device, or a compute device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. In embodiments of this application, an apparatus configured to implement a function of the terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete device. In the technical solutions provided in embodiments of this application, the technical solutions provided in embodiments of this application are described by using an example in which the apparatus configured to implement the function of the terminal is a terminal and the terminal is UE. A specific technology and a specific device form that are used by the terminal device are not limited in embodiments of this application.

The radio access network device may be a device that provides a wireless communication function service, is usually located on a network side, and includes but is not limited to a next generation NodeB (gNodeB, gNB) in a 5G communication system, a next generation base station in a 6th generation (6th generation, 6G) mobile communication system, a base station in a future mobile communication system, an access node in a Wi-Fi system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB or a home NodeB, HNB), a baseband unit (baseband unit, BBU), a transmission reception point (transmission reception point, TRP), a transmitting point (transmitting point, TP), a base transceiver station (base transceiver station, BTS), and the like. In a network structure, the access network device may include at least one of a central unit (central unit, CU), a distributed unit (distributed unit, DU), and a radio unit (radio unit, RU). The access network device provides a service for a cell. User equipment communicates with a base station by using a transmission resource (for example, a frequency domain resource, or a spectrum resource) used by the cell. The cell may be a cell corresponding to the base station. The cell may belong to a macro base station, or a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service. The radio access network device may be a satellite, or may be a macro base station, or may be a micro base station or an indoor base station, or may be a relay node or a donor node, a device that provides a wireless communication service for user equipment, a radio controller in a cloud radio access network (cloud radio access network, CRAN) scenario, a relay station, a vehicle-mounted device, a wearable device, a network device in a future evolved network, or the like. The access network device in embodiments may alternatively be an open-radio access network (open-radio access network, O-RAN) device. The O-RAN device may include at least one of an open-distributed unit (open-distributed unit, O-DU), an open-central unit (open-central unit, O-CU), and an open-radio unit (open-radio unit, O-RU).

A specific technology and a specific device form that are used by the radio access network device are not limited in embodiments of this application. For ease of description, the following provides descriptions by using an example in which the radio access network device is a base station.

In this application, a quantity of radio access network devices and a quantity of terminal devices may not be limited. For example, there may be at least one radio access network device, and each of the at least one radio access network device may be connected to at least one terminal device.

In this application, the radio access network device and the terminal device may be deployed on the land, including an indoor device, an outdoor device, a handheld device, or a vehicle-mounted device; may be deployed on the water; or may be deployed on an airplane, a balloon, and a satellite in the air. Application scenarios of the radio access network device and the terminal device are not limited in embodiments of this application.

As shown in FIG. 1, the terminal device may include a terminal device 1, a terminal device 2, ..., and a terminal device 6, and the radio access network device may include a base station. In the communication system, data transmission may be performed between the base station and the core network device. In addition, any one of the terminal device 1 to the terminal device 6 may send uplink data to the base station, and the base station needs to receive the uplink data sent by the any terminal device.

Optionally, the terminal device 4, the terminal device 5, and the terminal device 6 may form a communication system. In the communication system, the base station may send downlink information to the terminal device 1, the terminal device 2, the terminal device 3, and the terminal device 5, and the terminal device 5 may also send downlink information to the terminal device 4 and the terminal device 6.

Embodiments of this application are applicable to downlink signal transmission, are applicable to uplink signal transmission, and are further applicable to device-to-device (Device-To-Device, D2D) signal transmission. For the downlink signal transmission, a sending device is a radio access network device, and a corresponding receiving device is a terminal device. For the uplink signal transmission, a sending device is a terminal device, and a corresponding receiving device is a radio access network device. For the D2D signal transmission, a sending device is a terminal device, and a corresponding receiving device is also a terminal device. A signal transmission direction is not limited in embodiments of this application.

Communication between the radio access network device and the terminal device and communication between the terminal devices may be performed by using a licensed spectrum, an unlicensed spectrum, or both a licensed spectrum and an unlicensed spectrum. Communication between the radio access network device and the terminal device and communication between the terminal devices may be performed by using a spectrum below 6G GHz, a spectrum above 6G GHz, or both a spectrum below 6G GHz and a spectrum above 6G GHz. A spectrum resource used between the radio access network device and the terminal device is not limited in embodiments of this application.

In the communication system, channel detection may be performed between communication devices based on a channel map. The channel map may be defined as a database for storing channel characteristics of location information, where the characteristics include a channel statistical covariance matrix, an angle spectrum, a delay spectrum, and the like. The channel statistical covariance matrix may indicate a map basis in the channel map, the angle spectrum indicates a multipath angle in the channel map, and the delay spectrum indicates a multipath delay in the channel map.

Currently, division at a two-dimensional or three-dimensional lattice point level may be performed on a physical cell, and each lattice point stores several channel characteristics in a form of a matrix, a vector, or a scalar.

Optionally, an example of the channel map may be shown in FIG. 2. In this example, the division at the two-dimensional lattice point level is performed on the physical cell to obtain a plurality of lattice points, and each of the plurality of lattice points stores several channel characteristics, for example, a channel statistical covariance matrix, an angle spectrum, and a delay spectrum, in a form of a matrix, a vector, or a scalar. That is, each lattice point may correspond to one channel map or one channel sub-map in one channel map.

The channel statistical covariance matrix may indicate a map basis in the channel map, the angle spectrum indicates a multipath angle in the channel map, and the delay spectrum indicates a multipath delay in the channel map.

Optionally, the channel map may include a space domain channel map, a frequency domain channel map, a space-frequency channel map, and the like. The space domain channel map may include space domain-related channel characteristics, for example, a channel statistical covariance matrix and an angle spectrum in space domain. The frequency domain channel map may include frequency domain-related channel characteristics, for example, a channel statistical covariance matrix and a delay spectrum in frequency domain. The space-frequency channel map may include space-frequency (that is, a space domain and a frequency domain)-related channel characteristics, for example, a channel statistical covariance matrix, an angle spectrum, and a delay spectrum in space frequency. In some embodiments, the space-frequency channel map may also be referred to as a space-frequency joint channel map. Correspondingly, a channel map basis in the space-frequency channel map may be referred to as a space-frequency joint map basis, or a joint basis.

Channel detection with low pilot overheads may be implemented between the communication devices based on the channel map. For example, a channel covariance matrix at a specific location is provided by using the channel map, and prior channel covariance matrix information is used to assist in reducing SRS pilot overheads.

In a conventional channel map construction method, the communication device may construct a database based on historical data, and establish a mapping relationship between location information and a channel characteristic. Considering that historical measurement data is limited, a channel characteristic at an unknown location is usually supplemented based on a channel characteristic at a known location by using an interpolation method, to obtain a channel map of an entire cell.

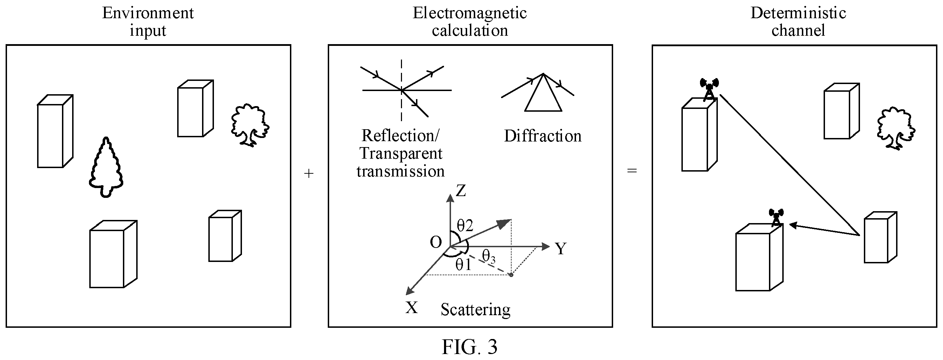

With the development of a digital twin technology, the channel map may be obtained by using a channel twin technology, that is, a map-based deterministic channel modeling scheme. As shown in FIG. 3, with reference to a prior environment map, reflection, diffraction, and scattering characteristics of a simulated communication multipath are calculated through electromagnetic simulation, to obtain a deterministic channel for constructing the channel map.

FIG. 4 is a diagram of a structure of a communication device according to an embodiment of this application. As shown in FIG. 4, a radio access network device and a terminal device each may include a radio resource management/control (radio resource control, RRC) signaling exchange module, a multimedia access management/control (medium access control, MAC) signaling exchange module, and a physical layer (physical layer, PHY) signaling and data exchange module.

The RRC signaling exchange module is configured for RRC signaling transmission, the MAC signaling exchange module is configured for MAC-control element (MAC-control element, MAC-CE) signaling transmission, and the PHY signaling and data exchange module is configured for uplink/downlink control signaling and uplink/downlink data transmission.

A core network device may include an access and mobility management function (access and mobility management function, AMF) network element, a location management function (location management function, LMF) network element/map management function (map management function, MMF) network element, and the like.

The AMF network element and the radio access network device may communicate with each other through a control plane interface (for example, an NG-C interface) between the radio access network device and the core network device, and the AMF network element and the LMF network element/MMF network element may communicate with each other through an NLs interface.

Optionally, the LMF network element may be configured to implement location estimation of the terminal device. In addition, the LMF network element/MMF network element may be configured to construct a channel map.

The AMF network element may be equivalent to a router for communication between the radio access network device and the LMF network element/MMF network element. Optionally, after constructing the channel map, the LMF network element/MMF network element may send the channel map to the radio access network device via the AMF network element.

Before channel detection is performed between communication devices based on a channel map, channel map transmission needs to be performed. In addition, because an electromagnetic environment changes unpredictably over time, the channel map is updated accordingly, and channel map transmission needs to be frequently performed between the communication devices.

In an existing channel map transmission method, a first network element may first obtain a channel map that needs to be transmitted, divide the channel map into a plurality of channel sub-maps, then project a channel map basis corresponding to each of the plurality of channel sub-maps onto a DFT basis, to obtain a projection coefficient corresponding to the channel sub-map, and finally send information to a second network element, where the information indicates at least one non-zero value in the projection coefficient corresponding to each channel sub-map and an index of the at least one non-zero value. Correspondingly, after receiving the information, the second network element may reconstruct the channel map basis based on the information, and then perform channel detection based on the reconstructed channel map basis.

In an example, the first network element may be a core network device, and the second network element may be a radio access network device.

In another example, the first network element may be a radio access network device, and the second network element may be a terminal device.

In the method, the first network element may divide the channel map based on a plurality of spatial grids, to obtain channel maps corresponding to the plurality of spatial grids. A channel map corresponding to each of the plurality of spatial grids may be referred to as a channel sub-map.

In an example, the channel map basis may be a space-frequency basis, a space domain basis, or a frequency domain basis.

In the method, the projection coefficient corresponding to each channel sub-map satisfies: ***U*** = ***B*** × ***C***, where ***B*** represents the DFT basis, ***U*** represents each channel sub-map basis, and ***C*** represents a projection coefficient corresponding to each channel sub-map basis.

However, when the first network element and the second network element perform channel map transmission according to the method, transmission overheads between the first network element and the second network element are high.

Therefore, this application provides a communication method, to resolve the problem of the high transmission overheads between the first network element and the second network element in the conventional technology.

In the technical solutions of this application, the first network element may send first information and second information to the second network element, where the first information indicates a first multipath angle and/or a first multipath delay, and the second information indicates a projection coefficient of a channel map basis in each channel sub-map in a first channel map. Correspondingly, after receiving the first information and the second information, the second network element may reconstruct the first channel map.

In the method, the first channel map may be a to-be-transmitted channel map. Optionally, the first channel map may be a space domain channel map, a frequency domain channel map, or a space-frequency channel map.

The first channel map may be divided based on a plurality of spatial grids, to obtain a plurality of channel sub-maps, and the plurality of channel sub-maps may be in one-to-one correspondence with the plurality of spatial grids.

A distance between any two of the plurality of spatial grids may be less than a distance threshold, and multipath angles in two channel sub-maps corresponding to any two of the plurality of spatial grids may be the same, and/or multipath delays in two channel sub-maps corresponding to any two of the plurality of spatial grids may be the same.

The first multipath angle may be a multipath angle in the first channel map, and the multipath angle in the first channel map may be equal to a multipath angle in any channel sub-map in the first channel map. The first multipath delay may be a multipath delay in the first channel map, and the multipath delay in the first channel map may be equal to a multipath delay in any channel sub-map in the first channel map.

In the method, after receiving the first information and the second information, the second network element may reconstruct each channel sub-map based on the first multipath angle and/or the first multipath delay and the projection coefficient of the channel map basis in each channel sub-map, that is, reconstruct the first channel map.

In the method, the first network element only needs to send the first multipath angle and/or the first multipath delay to the second network element, and does not need to send a multipath angle and/or a multipath delay in each channel sub-map. This helps reduce the transmission overheads between the first network element and the second network element.

In addition, the projection coefficient sent by the first network element to the second network element may be a vector rather than a matrix, to reduce the transmission overheads between the first network element and the second network element.

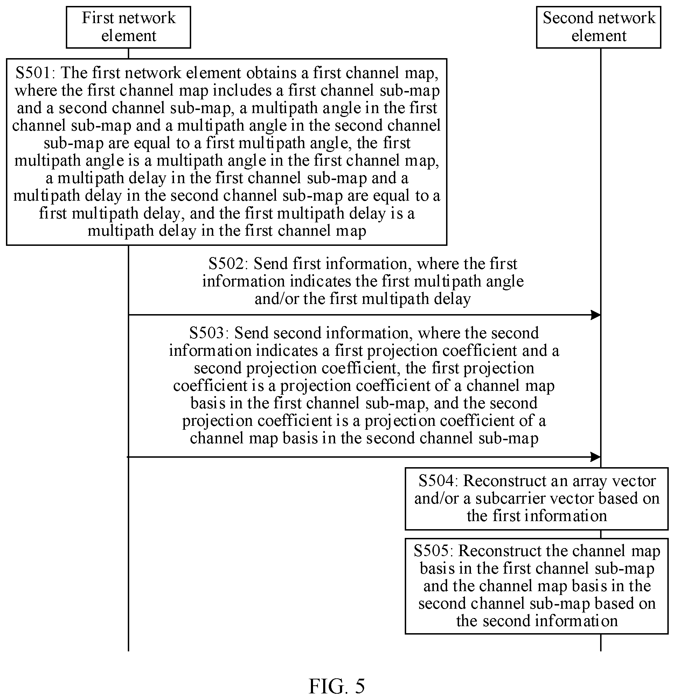

Next, in this application, the solutions of this application are described in detail with reference to FIG. 5 to FIG. 20.

FIG. 5 is a schematic flowchart of a communication method according to an embodiment of this application. As shown in FIG. 5, the communication method may include S501 to S505.

S501: A first network element obtains a first channel map, where the first channel map includes a first channel sub-map and a second channel sub-map, a multipath angle in the first channel sub-map and a multipath angle in the second channel sub-map are equal to a first multipath angle, the first multipath angle is a multipath angle in the first channel map, a multipath delay in the first channel sub-map and a multipath delay in the second channel sub-map are equal to a first multipath delay, and the first multipath delay is a multipath delay in the first channel map.

In an example, the first network element may be the core network device shown in FIG. 4, and a second network element may be the radio access network device shown in FIG. 4. In this example, the first network element may construct the first channel map based on an LMF network element/MMF network element in the first network element.

In another example, the first network element may be the radio access network device shown in FIG. 4, and a second network element may be the terminal device shown in FIG. 4. In this example, the first network element may obtain the first channel map from a core network device.

In the method, the first channel map may be a to-be-transmitted channel map. The first network element may divide the first channel map based on a plurality of spatial grids, to obtain channel maps corresponding to the plurality of spatial grids. A channel map corresponding to each of the plurality of spatial grids may be referred to as a channel sub-map. In other words, the first channel map may include a plurality of channel sub-maps. Optionally, the first channel sub-map and the second channel sub-map may be any two of the plurality of channel sub-maps.

That the multipath angle in the first channel sub-map and the multipath angle in the second channel sub-map are equal to the first multipath angle may be understood as follows: The multipath angle in the first channel sub-map is the same as the multipath angle in the second channel sub-map, the multipath angle in the first channel sub-map is equal to the first multipath angle, and the multipath angle in the second channel sub-map is equal to the first multipath angle.

That the multipath angle in the first channel sub-map is the same as the multipath angle in the second channel sub-map herein may be understood as follows: An array vector obtained through reconstruction based on the multipath angle in the first channel sub-map is the same as an array vector obtained through reconstruction based on the multipath angle in the second channel sub-map. Even if the first channel sub-map and the second channel sub-map include different multipath angles, both the multipath angles are angles in the first channel map. When a channel sub-map basis is reconstructed, a projection coefficient has a zero value for the different multipath angles, and the different multipath angles do not affect a reconstruction result.

That the multipath delay in the first channel sub-map and the multipath delay in the second channel sub-map are equal to the first multipath delay may be understood as follows: The multipath delay in the first channel sub-map is the same as the multipath delay in the second channel sub-map, the multipath delay in the first channel sub-map is equal to the first multipath delay, and the multipath delay in the second channel sub-map is equal to the first multipath delay.

That the multipath delay in the first channel sub-map is the same as the multipath delay in the second channel sub-map herein may be understood as follows: A subcarrier vector obtained through reconstruction based on the multipath delay in the first channel sub-map is the same as a subcarrier vector obtained through reconstruction based on the multipath delay in the second channel sub-map. Even if the first channel sub-map and the second channel sub-map include different multipath delays, both the multipath delays are delays in the first channel map. When a channel sub-map basis is reconstructed, a projection coefficient has a zero value for the different multipath delays, and the different multipath delays do not affect a reconstruction result.

In the method, the first channel map may be a space domain channel map, a frequency domain channel map, a space-frequency channel map, or the like.

When the first channel map is the space domain channel map, the first channel map may include a channel statistical covariance matrix, an angle spectrum, and the like. Correspondingly, each channel sub-map in the first channel map may also include a channel statistical covariance matrix, an angle spectrum, and the like. To be specific, each channel sub-map may indicate a channel map basis, a multipath angle, and the like in the channel sub-map.

When the first channel map is the frequency domain channel map, the first channel map may include a channel statistical covariance matrix, a delay spectrum, and the like. Correspondingly, each channel sub-map in the first channel map may also include a channel statistical covariance matrix, a delay spectrum, and the like. To be specific, each channel sub-map may indicate a channel map basis, a multipath delay, and the like in the channel sub-map.

When the first channel map is the space-frequency channel map, the first channel map may include a channel statistical covariance matrix, an angle spectrum, a delay spectrum, and the like. Correspondingly, each channel sub-map in the first channel map may also include a channel statistical covariance matrix, an angle spectrum, a delay spectrum, and the like. To be specific, each channel sub-map may indicate a channel map basis, a multipath angle, a multipath delay, and the like in the channel sub-map.

In the method, the first channel sub-map is adjacent to the second channel sub-map. That the first channel sub-map is adjacent to the second channel sub-map herein may not be completely adjacent, but a distance between spatial grids corresponding to the first channel sub-map and the second channel sub-map is within a preset distance threshold range.

S502: The first network element sends first information to the second network element, where the first information indicates the first multipath angle and/or the first multipath delay. Correspondingly, the second network element receives the first information.

In an example, when the first channel map is the space-frequency channel map, a signal sent by the first network element may reach the second network element through a plurality of paths, and each of the plurality of paths may include angle and delay characteristics, where an angle herein may include a horizontal angle and a vertical angle. In this case, the first information sent by the first network element to the second network element may indicate the first multipath angle and the first multipath delay.

In another example, when the first channel map is the space domain channel map, a signal sent by the first network element may reach the second network element through a plurality of paths, and each of the plurality of paths may include an angle characteristic. In this case, the first information sent by the first network element to the second network element may indicate the first multipath angle.

In still another example, when the first channel map is the frequency domain channel map, a signal sent by the first network element may reach the second network element through a plurality of paths, and each of the plurality of paths may include a delay characteristic. In this case, the first information sent by the first network element to the second network element may indicate the first multipath delay.

In the method, due to spatial continuity of a channel, the multipath angles in the first channel sub-map and the second channel sub-map are basically the same, and/or the multipath delays in the first channel sub-map and the second channel sub-map are basically the same. The first network element does not need to send a multipath angle and/or a multipath delay in each channel sub-map to the second network element. This helps reduce transmission overheads between the first network element and the second network element.

S503: The first network element sends second information to the second network element, where the second information indicates a first projection coefficient and a second projection coefficient, the first projection coefficient is a projection coefficient of a channel map basis in the first channel sub-map, and the second projection coefficient is a projection coefficient of a channel map basis in the second channel sub-map. Correspondingly, the second network element receives the second information.

In the method, the projection coefficient of the channel map basis in the first channel sub-map may be a projection coefficient obtained by projecting the first channel sub-map onto an array vector and/or a subcarrier vector. An array herein may be an array of an access network device (or a base station array), and a subcarrier herein may be a subcarrier used for signal transmission between the first network element and the second network element.

The projection coefficient of the channel map basis in the second channel sub-map may also be a projection coefficient obtained by projecting the second channel sub-map onto an array vector and/or a subcarrier vector.

In an example, when the first channel map is the space-frequency channel map, the projection coefficient of the channel map basis in the first channel sub-map may be a projection coefficient obtained by projecting the first channel sub-map basis onto the array vector and the subcarrier vector.

In another example, when the first channel map is the space domain channel map, the projection coefficient of the channel map basis in the first channel sub-map may be a projection coefficient obtained by projecting the first channel sub-map basis onto the array vector.

In still another example, when the first channel map is the frequency domain channel map, the projection coefficient of the channel map basis in the first channel sub-map may be a projection coefficient obtained by projecting the first channel sub-map basis onto the subcarrier vector.

Next, this application is described by using an example in which the first channel map is the space-frequency channel map.

In this application, when the first channel map is the space-frequency channel map, the projection coefficient of the channel map basis in the first channel sub-map may satisfy Formula (1): $\left\{\begin{matrix}{min}_{ρ \left(l\right)} {\left‖U{U}^{H}-{\sum }_{l} ρ \left(l\right) \left(e\left({θ}_{l}, {ϕ}_{l}\right){e}^{H}\left({θ}_{l}, {ϕ}_{l}\right)\right) ⊗ \left({e}^{∗}\left({τ}_{l}\right){e}^{T}\left({τ}_{l}\right)\right)\right‖}_{F} \\ s . t . ρ \left(l\right) > 0\end{matrix}\right.$ (1)

***U*** represents the channel map basis in the first channel sub-map, ***U**^{H}* represents a conjugate transpose matrix of ***U,** ρ*(*l*) represents the projection coefficient of the channel map basis in the first channel sub-map, *l* represents each element in the projection coefficient, ***e***(*θₗ, ϕₗ*) represents an array vector corresponding to a multipath angle (*θₗ, ϕₗ*), *θₗ* is a pitch angle (or a vertical angle), *ϕₗ* is a horizontal angle, ***e**^{H}* (*θₗ, ϕₗ*) represents a conjugate transpose matrix of the array vector, ***e***(*τₗ*) represents a subcarrier vector corresponding to a multipath delay, *τₗ* represents the multipath delay, ***e****(*τₗ*) represents a conjugate matrix of the subcarrier vector, ***e**^{T}*(*τₗ*) represents a transpose matrix of the subcarrier vector, ∥.∥_{F} represents a Frobenius norm, and ⊗ represents a Kronecker product.

The subcarrier vector ***e***(*τₗ*) may satisfy Formula (2): $e \left({τ}_{l}\right) = {\left[{e}^{j 2 {πf}_{0} {τ}_{l}}, ⋯, {e}^{j 2 {πf}_{N - 1} {τ}_{l}}\right]}^{T} ∈ {ℂ}^{N \times 1}$ (2)
*fᵢ* represents a frequency of a subcarrier, and a value of i may be 0 to *N*-1.

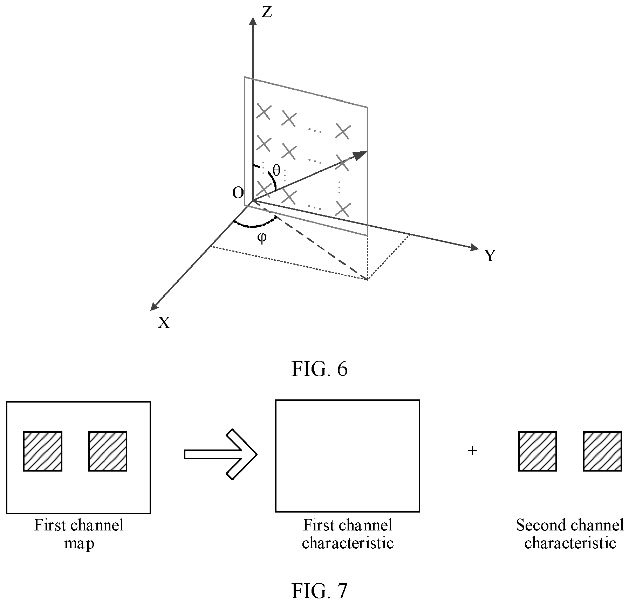

For example, the base station array may be shown in FIG. 6. In this example, the base station array is a uniform planar array. In this example, the array vector ***e***(*θₗ, ϕₗ*) may satisfy Formula (3): $e \left({θ}_{l}, {ϕ}_{l}\right) = {e}_{h} \left({θ}_{l}, {ϕ}_{l}\right) ⊗ {e}_{v} \left({θ}_{l}\right)$ (3)
***e**ₕ*(*θₗ, ϕₗ*) may represent an array vector of a horizontal element, and ***e**ᵥ*(*θₗ*) represents an array vector of a vertical element.

The array vector ***e**ₕ*(*θₗ*, *ϕₗ*) of the horizontal element may satisfy Formula (4): ${e}_{h} \left({θ}_{l}, {ϕ}_{l}\right) = {\left[1, ⋯, {e}^{j 2 π \frac{\left({M}_{h}-1\right) {D}_{h} sin \left({θ}_{l}\right) sin \left({ϕ}_{l}\right)}{{λ}_{0}}}\right]}^{T} ∈ {ℂ}^{{M}_{h} \times 1}$ (4)

*Dₕ* is a horizontal element spacing, and *Mₕ* is a quantity of single-polarized horizontal elements.

The array vector of the vertical element may satisfy Formula (5): ${e}_{v} \left({θ}_{l}\right) = {\left[1, ⋯, {e}^{j 2 π \frac{\left({M}_{v}-1\right) {D}_{v} cos \left({θ}_{l}\right)}{{λ}_{0}}}\right]}^{T} ∈ {ℂ}^{{M}_{v} \times 1}$ (5)

*Dᵥ* is a vertical element spacing, and *Mᵥ* is a quantity of single-polarized vertical elements.

In this example, a total quantity of elements in the base station array may be *M* = 2*MₕMᵥ*.

In the method, for a process of calculating the projection coefficient of the channel map basis in the second channel sub-map, refer to a process of calculating the projection coefficient of the channel map basis in the first channel sub-map. Details are not described herein again.

In a possible implementation, that the second information indicates the first projection coefficient may include: The second information may include a non-zero value in the first projection coefficient and an index of the non-zero value in the first projection coefficient.

In the method, the index of the non-zero value in the first projection coefficient may indicate a location of the non-zero value in the first projection coefficient.

The first network element may first calculate the projection coefficient of the channel map basis in the first channel sub-map, where the first projection coefficient may include at least one non-zero value, and then send each of the at least one non-zero value and an index of the non-zero value to the second network element. In this way, the second network element may determine a location of each of the at least one non-zero value in the first projection coefficient based on the index of the non-zero value, to determine the first projection coefficient.

In the method, the first network element may send the non-zero value rather than all values in the first projection coefficient to the second network element. This helps reduce the transmission overheads.

In an embodiment, that the second information indicates the second projection coefficient may include: The second information may include a non-zero value in the second projection coefficient and an index of the non-zero value in the second projection coefficient.

In the method, the index of the non-zero value in the second projection coefficient may indicate a location of the non-zero value in the second projection coefficient.

The first network element may first calculate the projection coefficient of the channel map basis in the second channel sub-map, where the second projection coefficient may include at least one non-zero value, and then send each of the at least one non-zero value and an index of the non-zero value to the second network element. In this way, the second network element may determine a location of each of the at least one non-zero value in the second projection coefficient based on the index of the non-zero value, to determine the second projection coefficient.

In the method, the first network element may send the non-zero value rather than all values in the second projection coefficient to the second network element. This helps reduce the transmission overheads.

It may be understood that this embodiment is described by using an example in which the first channel map includes the first channel sub-map and the second channel sub-map. When the first channel map includes a plurality of channel sub-maps, the method is also applicable.

For example, when the first channel map further includes a third channel sub-map, the first network element may first calculate a projection coefficient of a channel map basis in each of the three channel sub-maps, to obtain three projection coefficients, where the three projection coefficients are in one-to-one correspondence with the three channel sub-maps. Then, the first network element sends a non-zero value in each of the three projection coefficients and an index of the non-zero value to the second network element. Finally, the second network element may determine each projection coefficient based on the non-zero value in the projection coefficient and the index of the non-zero value.

Optionally, the first network element may further send, to the second network element, an index of a channel sub-map corresponding to each of a plurality of projection coefficients. In this way, the second network element may determine, based on the index of the channel sub-map corresponding to each projection coefficient, a location of the channel sub-map corresponding to the projection coefficient in the first channel map.

In another embodiment, that the second information indicates the second projection coefficient may include: The second information further includes a non-zero value in a difference between the second projection coefficient and the first projection coefficient and an index of the non-zero value in the difference.

In this embodiment, the first network element may first calculate the first projection coefficient and the second projection coefficient, and calculate the difference between the first projection coefficient and the second projection coefficient. Then, the first network element sends the non-zero value in the first projection coefficient, the index of the non-zero value in the first projection coefficient, the non-zero value in the difference between the second projection coefficient and the first projection coefficient, and the index of the non-zero value in the difference to the second network element. In this way, the second network element may determine the first projection coefficient based on the non-zero value in the first projection coefficient and the index of the non-zero value in the first projection coefficient, and then may determine the second projection coefficient based on the non-zero value in the difference between the second projection coefficient and the first projection coefficient, the index of the non-zero value in the difference, and the first projection coefficient.

The second projection coefficient and the first projection coefficient may be vectors, the difference between the second projection coefficient and the first projection coefficient is also a vector, and the difference between the second projection coefficient and the first projection coefficient may be a difference between elements at corresponding locations in the second projection coefficient and the first projection coefficient.

In the method, there may be a common subspace between the second channel sub-map and the first channel sub-map. In this case, the difference between the first projection coefficient and the second projection coefficient may be zero, or some elements in the difference may be zero, and a quantity of non-zero values in the difference may be less than a quantity of non-zero values in the second projection coefficient, so that a quantity of non-zero values sent by the first network element can be reduced. This helps reduce the transmission overheads.

It may be understood that this embodiment is described by using an example in which the first channel map includes the first channel sub-map and the second channel sub-map. When the first channel map includes a plurality of channel sub-maps, the method is also applicable.

For example, when the first channel map further includes a third channel sub-map, the first network element may first calculate a projection coefficient of a channel map basis in each of the three channel sub-maps, to obtain three projection coefficients, where the three projection coefficients are in one-to-one correspondence with the three channel sub-maps. Then, the first network element sends, to the second network element, the non-zero value in the first projection coefficient, the index of the non-zero value in the first projection coefficient, a non-zero value in a difference between a projection coefficient of each of the second channel sub-map basis and a third channel sub-map basis and the first projection coefficient, and an index of the non-zero value in the difference. Finally, the second network element may determine the first projection coefficient based on the non-zero value in the first projection coefficient and the index of the non-zero value in the first projection coefficient, and determine the second projection coefficient and a third projection coefficient based on the non-zero value in the difference between the projection coefficient of each of the second channel sub-map basis and the third channel sub-map basis and the first projection coefficient, and the index of the non-zero value in the difference.

The third projection coefficient may be a projection coefficient of the channel map basis in the third channel sub-map.

Optionally, the first network element may further send, to the second network element, an index of a channel sub-map corresponding to each of a plurality of projection coefficients. In this way, the second network element may determine, based on the index of the channel sub-map corresponding to each projection coefficient, a location of the channel sub-map corresponding to the projection coefficient in the first channel map.

In another possible implementation, there may be a common subspace between the channel map basis in the first channel sub-map and the channel map basis in the second channel sub-map, and the common subspace between the channel map basis in the first channel sub-map and the channel map basis in the second channel sub-map may be referred to as a common channel map basis.

It is assumed that the channel map basis in the first channel sub-map is ***U***₀, the channel map basis in the second channel sub-map is ***U***₁, and the common subspace between the channel map basis in the first channel sub-map and the channel map basis in the second channel sub-map is ***v***₀₁. Any vector ***v*** in ***v***₀₁ satisfies Formula (6): $v = {P}_{{U}_{0}} {P}_{{U}_{1}} v$ (6)

***P*_{*U*0}** and ***P*_{*U*1}** are respectively projection matrices of ***U***₀ and ***U***₁ , ${P}_{{U}_{0}} = {U}_{0} {\left({U}_{0}^{H}{U}_{0}\right)}^{- 1} {U}_{0}^{H} , {P}_{{U}_{1}} = {U}_{1} {\left({U}_{1}^{H}{U}_{1}\right)}^{- 1} {U}_{1}^{H} , {U}_{0}^{H}$ is a conjugate transpose matrix of ***U***₀, and ${U}_{1}^{H}$ is a conjugate transpose matrix of ***U***₁.

The channel map basis in the first channel sub-map may include the common channel map basis and/or a first non-common channel map basis, and a direct sum of the common channel map basis and the first non-common channel map basis is equal to the channel map basis in the first channel sub-map.

Assuming that a subspace orthogonal to ***v***₀₁ in ***U***₀ is ***D***₀, ***D***₀ may be a non-common subspace in the first channel sub-map, namely, the first non-common channel map basis, where ***D***₀, ***v***₀₁, and ***U***₀ may satisfy: ***D***₀ ⊕ ***V***₀₁ = ***U***₀.

Optionally, in some embodiments, all elements in ***D***₀ may be zero, that is, the channel map basis in the first channel sub-map may not include the first non-common channel map basis.

In this implementation, the projection coefficient (namely, the first projection coefficient) of the channel map basis in the first channel sub-map may include a first subspace projection coefficient and/or a second subspace projection coefficient, the first subspace projection coefficient is a projection coefficient of the common channel map basis, and the second subspace projection coefficient is a projection coefficient of the first non-common channel map basis.

In this implementation, that the second information indicates the first projection coefficient may include: The second information includes a non-zero value in the first subspace projection coefficient, an index of the non-zero value in the first subspace projection coefficient, a non-zero value in the second subspace projection coefficient, and an index of the non-zero value in the second subspace projection coefficient.

In the method, the first network element may first calculate the first subspace projection coefficient and the second subspace projection coefficient, and then send the second information to the second network element. After receiving the second information, the second network element may determine the first subspace projection coefficient based on the non-zero value in the first subspace projection coefficient and the index of the non-zero value in the first subspace projection coefficient, and determine the second subspace projection coefficient based on the non-zero value in the second subspace projection coefficient and the index of the non-zero value in the second subspace projection coefficient, to restore the common channel map basis and the first non-common channel map basis based on the first subspace projection coefficient and the second subspace projection coefficient, and perform direct summation on the common channel map basis and the first non-common channel map basis to obtain the channel map basis in the first channel sub-map.

The channel map basis in the second channel sub-map may include the common channel map basis and/or a second non-common channel map basis, and a direct sum of the common channel map basis and the second non-common channel map basis is equal to the channel map basis in the second channel sub-map.

Assuming that a subspace orthogonal to ***v***₀₁ in ***U***₁ is ***D***₁, ***D***₁ may be a non-common subspace in the second channel sub-map, namely, the second non-common channel map basis, where ***D***₁, ***v***₀₁, and ***U***₁ may satisfy: ***D***₁ ⊕ ***V***₀₁ = ***U***₁.

Optionally, in some embodiments, all elements in ***D***₁ may be zero, that is, the channel map basis in the second channel sub-map may not include the second non-common channel map basis.

In this implementation, the projection coefficient (namely, the second projection coefficient) of the channel map basis in the second channel sub-map may include the first subspace projection coefficient and/or a third subspace projection coefficient, the first subspace projection coefficient is the projection coefficient of the common channel map basis, and the third subspace projection coefficient is a projection coefficient of the second non-common channel map basis.

In this implementation, that the second information indicates the second projection coefficient may include: The second information further includes a non-zero value in the third subspace projection coefficient and an index of the non-zero value in the third subspace projection coefficient.

In the method, the first network element may first calculate the third subspace projection coefficient, and then send the second information to the second network element. After receiving the second information, the second network element may determine the third subspace projection coefficient based on the non-zero value in the third subspace projection coefficient and the index of the non-zero value in the third subspace projection coefficient, to restore the common channel map basis and the second non-common channel map basis based on the first subspace projection coefficient and the third subspace projection coefficient, and perform direct summation on the common channel map basis and the second non-common channel map basis to obtain the channel map basis in the second channel sub-map.

In the method, the first subspace projection coefficient is the projection coefficient corresponding to the common subspace between the channel map basis in the first channel sub-map and the channel map basis in the second channel sub-map. The first network element may send the first subspace projection coefficient to the second network element only once. This helps reduce the transmission overheads.

It may be understood that this embodiment is described by using an example in which the first channel map includes the first channel sub-map and the second channel sub-map. When the first channel map includes a plurality of channel sub-maps, the method is also applicable.

For example, when the first channel map further includes a third channel sub-map, the first network element may calculate a common subspace and a non-common subspace between a channel map basis in each of the second channel sub-map and the third channel sub-map and the channel map basis in the first channel sub-map, and then calculate projection coefficients of the common subspace and the non-common subspace between the channel map basis in the channel sub-map and the channel map basis in the first channel sub-map. Then, the first network element sends, to the second network element, non-zero values in the projection coefficients of the common subspace and the non-common subspace between the channel map basis in each channel sub-map and the channel map basis in the first channel sub-map, and indexes of the non-zero values. In this way, the second network element may determine the second projection coefficient and a third projection coefficient based on the non-zero values in the projection coefficients of the common subspace and the non-common subspace between the channel map basis in each channel sub-map and the channel map basis in the first channel sub-map, and the indexes of the non-zero values.

The third projection coefficient may be a projection coefficient of a channel map basis in the third channel sub-map.

Optionally, the first network element may further send, to the second network element, an index of a channel sub-map corresponding to each of a plurality of projection coefficients. In this way, the second network element may determine, based on the index of the channel sub-map corresponding to each projection coefficient, a location, of the channel sub-map corresponding to the projection coefficient in the first channel map.

Optionally, in some embodiments, there may be no common subspace between the channel map basis in the first channel sub-map and the channel map basis in the second channel sub-map, that is, all elements in ***v***₀₁ may be zero.

S504: The second network element reconstructs the array vector and/or the subcarrier vector based on the first information.

Optionally, the first network element may further send third information to the second network element, where the third information may indicate an arrangement manner of the base station array and/or a quantity of subcarriers. Correspondingly, the second network element may receive the third information.

In the method, the second network element may calculate the array vector based on the first multipath angle and the arrangement manner of the base station array, where for a method for calculating the array vector, refer to Formula (3), and details are not described herein again;
and/or the second network element may calculate the subcarrier vector based on the first multipath delay and the quantity of subcarriers, where for a method for calculating the subcarrier vector, refer to Formula (2), and details are not described herein again.

In an example, when the first channel map is the space-frequency channel map, the second network element may calculate the array vector based on the first multipath angle and the arrangement manner of the base station array, and calculate the subcarrier vector based on the first multipath delay and the quantity of subcarriers.

S505: The second network element reconstructs the channel map basis in the first channel sub-map and the channel map basis in the second channel sub-map based on the second information.

In some embodiments, the second information directly indicates the first projection coefficient and the second projection coefficient. For example, the second information may include the first projection coefficient and the second projection coefficient. In this case, the second network element may respectively determine the channel map basis in the first channel sub-map and the channel map basis in the second channel sub-map based on the first projection coefficient and the second projection coefficient; and then reconstruct the first channel sub-map based on the channel map basis in the first channel sub-map and the first multipath angle and/or the first multipath delay in the first information, and reconstruct the second channel sub-map based on the channel map basis in the second channel sub-map and the first multipath angle and/or the first multipath delay in the first information.

The first projection coefficient is used as an example. A method in which the second network element determines the channel map basis in the first channel sub-map based on the first projection coefficient may include: constructing the array vector and/or the subcarrier vector based on the first multipath angle and/or the first multipath delay, reconstructing a first matrix based on the first projection coefficient and the array vector and/or the subcarrier vector, and then obtaining the channel map basis in the reconstructed first channel sub-map based on the first matrix.

In this example, the first matrix may satisfy Formula (7): ${W}^{˜} = {\sum }_{l} ρ \left(l\right) \left(e\left({θ}_{l}, {ϕ}_{l}\right){e}^{H}\left({θ}_{l}, {ϕ}_{l}\right)\right) ⊗ \left({e}^{∗}\left({τ}_{l}\right){e}^{T}\left({τ}_{l}\right)\right)$ (7)

***W̃*** is the first matrix.

In this example, the second network element may calculate the first matrix according to Formula (7).

Optionally, the second network element may perform singular value decomposition (singular value decomposition, SVD) on the first matrix, to obtain the channel map basis in the reconstructed first channel sub-map. The channel map basis in the first channel sub-map and the first matrix may satisfy Formula (8): ${W}^{˜} = {U}^{˜} Λ {{U}^{˜}}^{H}$ (8)

***Ũ*** represents the channel map basis in the reconstructed first channel sub-map, and ***Ũ****^{H}* represents a conjugate transpose matrix of ***Ũ***.

In the method, for a method in which the second network element determines the channel map basis in the second channel sub-map based on the second projection coefficient, refer to the foregoing method in which the second network element determines the channel map basis in the first channel sub-map based on the first projection coefficient. Details are not described herein again.

In some embodiments, the second information indirectly indicates the first projection coefficient and the second projection coefficient.

In an example, the second information may include the non-zero value in the first projection coefficient, the index of the non-zero value in the first projection coefficient, the non-zero value in the second projection coefficient, and the index of the non-zero value in the second projection coefficient.

In this example, the second network element may determine the first projection coefficient based on the non-zero value in the first projection coefficient and the index of the non-zero value in the first projection coefficient, and determine the second projection coefficient based on the non-zero value in the second projection coefficient and the index of the non-zero value in the second projection coefficient; then respectively determine the channel map basis in the first channel sub-map and the channel map basis in the second channel sub-map based on the first projection coefficient and the second projection coefficient; and finally reconstruct the first channel sub-map based on the channel map basis in the first channel sub-map and the first multipath angle and/or the first multipath delay in the first information, and reconstruct the second channel sub-map based on the channel map basis in the second channel sub-map and the first multipath angle and/or the first multipath delay in the first information.

For a method in which the second network element respectively determines the channel map basis in the first channel sub-map and the channel map basis in the second channel sub-map based on the first projection coefficient and the second projection coefficient, refer to the foregoing embodiment. Details are not described herein again.

In another example, the second information may include the non-zero value in the first projection coefficient, the index of the non-zero value in the first projection coefficient, the non-zero value in the difference between the second projection coefficient and the first projection coefficient, and the index of the non-zero value in the difference.

In this example, the second network element may determine the first projection coefficient based on the non-zero value in the first projection coefficient and the index of the non-zero value in the first projection coefficient, and determine the second projection coefficient based on the first projection coefficient, the non-zero value in the difference between the second projection coefficient and the first projection coefficient, and the index of the non-zero value in the difference; then respectively determine the channel map basis in the first channel sub-map and the channel map basis in the second channel sub-map based on the first projection coefficient and the second projection coefficient; and finally reconstruct the first channel sub-map based on the channel map basis in the first channel sub-map and the first multipath angle and/or the first multipath delay in the first information, and reconstruct the second channel sub-map based on the channel map basis in the second channel sub-map and the first multipath angle and/or the first multipath delay in the first information.

In still another example, the second information may include: the non-zero value in the first subspace projection coefficient, the index of the non-zero value in the first subspace projection coefficient, the non-zero value in the second subspace projection coefficient, the index of the non-zero value in the second subspace projection coefficient, the non-zero value in the third subspace projection coefficient, and the index of the non-zero value in the third subspace projection coefficient.

In this example, the second network element may determine the first subspace projection coefficient based on the non-zero value in the first subspace projection coefficient and the index of the non-zero value in the first subspace projection coefficient, determine the second subspace projection coefficient based on the non-zero value in the second subspace projection coefficient and the index of the non-zero value in the second subspace projection coefficient, and determine the third subspace projection coefficient based on the non-zero value in the third subspace projection coefficient and the index of the non-zero value in the third subspace projection coefficient.

Then, the second network element may obtain the reconstructed common channel map basis based on the first subspace projection coefficient, obtain the reconstructed first non-common channel map basis based on the second subspace projection coefficient, and obtain the reconstructed second non-common channel map basis based on the third subspace projection coefficient.

Finally, the second network element may calculate the first channel sub-map basis based on the common channel map basis and the first non-common channel map basis, and calculate the second channel sub-map basis based on the common channel map basis and the second non-common channel map basis.

In the method, for a method in which the second network element may obtain the reconstructed common channel map basis based on the first subspace projection coefficient, a method in which the second network element may obtain the reconstructed first non-common channel map basis based on the second subspace projection coefficient, and a method in which the second network element may obtain the reconstructed second non-common channel map basis based on the third subspace projection coefficient, refer to the method in which the second network element reconstructs the channel map basis in the first channel sub-map based on the first projection coefficient in the foregoing embodiment. Details are not described herein again.

In the method, the first channel sub-map basis is equal to the direct sum of the common channel map basis and the first non-common channel map basis, and the second channel sub-map basis is equal to the direct sum of the common channel map basis and the second non-common channel map basis.

Optionally, the second information may further include an index of the first channel sub-map and an index of the second channel sub-map. In this case, the second network element may determine the first channel map based on the reconstructed first channel sub-map, the reconstructed second channel sub-map, the index of the first channel sub-map, and the index of the second channel sub-map.

In an example, the index of the first channel sub-map may be a grid index corresponding to the first channel sub-map, and the grid index corresponding to the first channel sub-map indicates a grid corresponding to the first channel sub-map. The index of the second channel sub-map may be a grid index corresponding to the second channel sub-map, and the grid index corresponding to the second channel sub-map indicates a grid corresponding to the second channel sub-map.

It may be understood that the foregoing calculation formulas of the first projection coefficient and the first matrix are described by using an example in which the first channel map is the space-frequency channel map. When the first channel map is the space domain channel map or the frequency domain channel map, the calculation formula of the first projection coefficient and the calculation formula of the first matrix vary.

For example, when the first channel map is the space domain channel map, Formula (1) and Formula (7) do not include a matrix related to the subcarrier vector, that is, do not include the conjugate matrix of the subcarrier vector and the transpose matrix of the subcarrier vector.

For another example, when the first channel map is the frequency domain channel map, Formula (1) and Formula (7) do not include a matrix related to the array vector, that is, do not include the array vector and the conjugate transpose matrix of the array vector.

In the method, layered transmission may be performed on channel characteristics of the first channel map.

As shown in FIG. 7, it is assumed that the first channel map includes the first channel sub-map and the second channel sub-map. The first network element may first divide the first channel map into a first channel characteristic and a second channel characteristic, where the first channel characteristic includes the multipath angle in the first channel map and/or the multipath delay in the first channel map, and the second channel characteristic includes the channel map basis in the first channel sub-map and the channel map basis in the second channel sub-map. Then, the first network element sends the first information and the second information to the second network element, where the first information indicates the first multipath angle and/or the first multipath delay, and the second information indicates the projection coefficient of the channel map basis in the first channel sub-map and the projection coefficient of the channel map basis in the second channel sub-map.

In this example, a box may represent the first channel characteristic in the first channel map, and a shadow part represents the second channel characteristic.

Next, in this application, interaction between the first network element and the second network element is described in detail by using an example in which the first channel map is the space-frequency channel map.

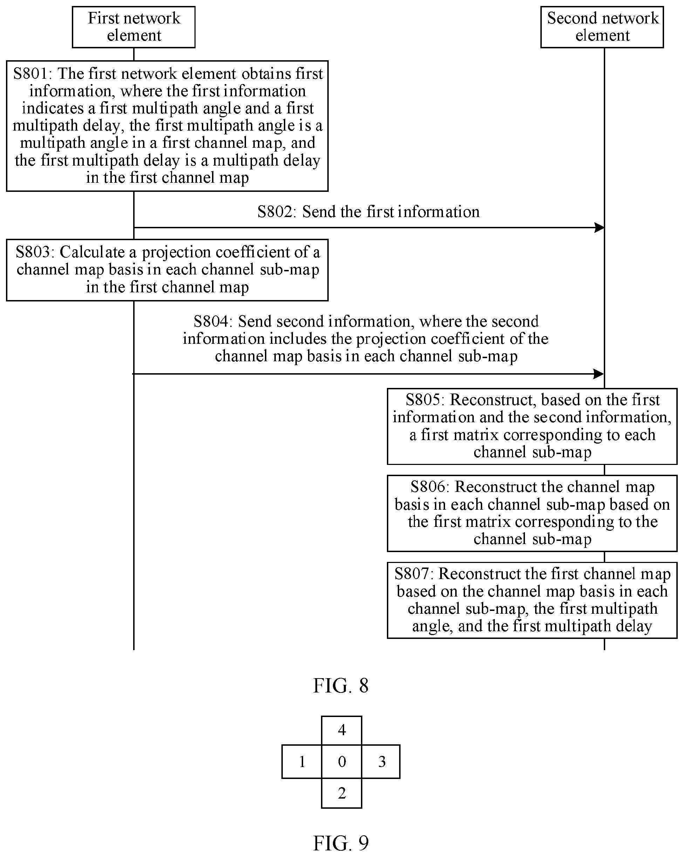

FIG. 8 is a schematic flowchart of a communication method according to an embodiment of this application.

S801: A first network element obtains first information, where the first information indicates a first multipath angle and a first multipath delay, the first multipath angle is a multipath angle in a first channel map, and the first multipath delay is a multipath delay in the first channel map.

It is assumed that the first channel map may be shown in FIG. 9. The first channel map may be divided into five grids: a grid 0, a grid 1, a grid 2, a grid 3, and a grid 4. Each of the five grids may correspond to one channel sub-map.

In this example, the grid 0 may correspond to a channel sub-map 1, the grid 1 may correspond to a channel sub-map 2, the grid 2 may correspond to a channel sub-map 3, the grid 3 may correspond to a channel sub-map 4, and the grid 4 may correspond to a channel sub-map 5.

In this example, multipath angles in any two of the five channel sub-maps may be the same, and multipath delays in any two of the five channel sub-maps may also be the same.

In the method, the first multipath angle may be equal to a multipath angle in any one of the five channel sub-maps. The first multipath delay may be equal to a multipath delay in any one of the five channel sub-maps.

S802: The first network element sends the first information to a second network element. Correspondingly, the second network element receives the first information.

S803: The first network element calculates a projection coefficient of a channel map basis in each channel sub-map in the first channel map.

In the method, the first network element may calculate a projection coefficient corresponding to a channel map basis in each of the five channel sub-maps, to obtain five projection coefficients.

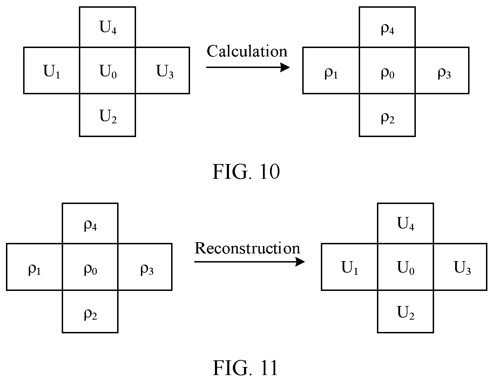

As shown in FIG. 10, assuming that ***U***₀ represents a channel map basis in the channel sub-map 1, a projection coefficient that is of the channel map basis in the channel sub-map 1 and that is obtained by the first network element through calculation is *ρ*₀ . Assuming that ***U***₁ represents a channel map basis in the channel sub-map 2, a projection coefficient that is of the channel map basis in the channel sub-map 2 and that is obtained by the first network element through calculation is *ρ*₁. Assuming that ***U***₂ represents a channel map basis in the channel sub-map 3, a projection coefficient that is of the channel map basis in the channel sub-map 3 and that is obtained by the first network element through calculation is *ρ*₂. Assuming that ***U***₃ represents a channel map basis in the channel sub-map 4, a projection coefficient that is of the channel map basis in the channel sub-map 4 and that is obtained by the first network element through calculation is *ρ*₃. Assuming that ***U***₄ represents a channel map basis in the channel sub-map 5, a projection coefficient that is of the channel map basis in the channel sub-map 5 and that is obtained by the first network element through calculation is *ρ*₄.

In the method, for a method for calculating the projection coefficient of the channel map basis in each channel sub-map, refer to the method for calculating the first projection coefficient in the foregoing embodiment. Details are not described herein again.

S804: The first network element sends second information to the second network element, where the second information includes the projection coefficient of the channel map basis in each channel sub-map. Correspondingly, the second network element may receive the second information.

Optionally, the second information may further include an index of each channel sub-map, and the index of each channel sub-map indicates a location of each channel sub-map in the first channel map. The index of each channel sub-map may be in one-to-one correspondence with the projection coefficient of each channel sub-map.

In an example, the index of each channel sub-map may be a grid index corresponding to each channel sub-map, and the grid index corresponding to each channel sub-map indicates a grid corresponding to each channel sub-map.

Optionally, the first network element may further send third information to the second network element, where the third information indicates an arrangement manner of a base station array and a quantity of subcarriers. Correspondingly, the second network element may receive the third information.

In addition, when the arrangement manner of the base station array and/or the quantity of subcarriers are/is updated, the first network element may further send an updated arrangement manner of the base station array and/or an updated quantity of subcarriers to the second network element.

S805: The second network element reconstructs, based on the first information and the second information, a first matrix corresponding to each channel sub-map.

The channel sub-map 1 is used as an example. The second network element may reconstruct, based on the projection coefficient of the channel map basis in the channel sub-map 1, a first matrix corresponding to the channel sub-map 1.

Specifically, the second network element may first calculate an array vector based on the first multipath angle and the arrangement manner of the base station array, and calculate a subcarrier vector based on the first multipath delay and the quantity of subcarriers. Then, the second network element may calculate, based on the projection coefficient of the channel map basis in the channel sub-map 1, the array vector, and the subcarrier vector, the first matrix corresponding to the channel sub-map 1.

In the method, for a method for calculating the array vector and the subcarrier vector, refer to the foregoing embodiment. Details are not described herein again.

In the method, for a method for calculating the first matrix corresponding to the channel sub-map 1, refer to the method for calculating the first matrix corresponding to the first channel sub-map in the foregoing embodiment. Details are not described herein again.

Optionally, the second network element may determine the projection coefficient of the channel map basis in the channel sub-map 1 from the received five projection coefficients based on an index of the channel sub-map 1.

In the method, a method for calculating a first matrix corresponding to any one of the channel sub-map 2 to the channel sub-map 5 is similar to the method for calculating the first matrix corresponding to the channel sub-map 1. Details are not described herein again.

S806: The second network element reconstructs the channel map basis in each channel sub-map based on the first matrix corresponding to the channel sub-map.

In the method, the second network element may reconstruct the channel map basis in the channel sub-map 1 based on the first matrix corresponding to the channel sub-map 1. The second network element may reconstruct the channel map basis in the channel sub-map 2 based on a first matrix corresponding to the channel sub-map 2. The second network element may reconstruct the channel map basis in the channel sub-map 3 based on a first matrix corresponding to the channel sub-map 3. The second network element may reconstruct the channel map basis in the channel sub-map 4 based on a first matrix corresponding to the channel sub-map 4. The second network element may reconstruct the channel map basis in the channel sub-map 5 based on a first matrix corresponding to the channel sub-map 5.

For a method for reconstructing the channel map basis in each channel sub-map, refer to related content in the foregoing embodiment. Details are not described herein again.

S807: The second network element reconstructs the first channel map based on the channel map basis in each channel sub-map, the first multipath angle, and the first multipath delay.

In the method, the second network element may first reconstruct each channel sub-map based on the channel map basis in each channel sub-map, the first multipath angle, and the first multipath delay, and then integrate all channel sub-maps into the first channel map based on indexes of all the channel sub-maps.

Optionally, a method in which the second network element reconstructs the first channel map may be shown in FIG. 11.

Optionally, in some embodiments, S802 may alternatively be performed after S803 or S804.

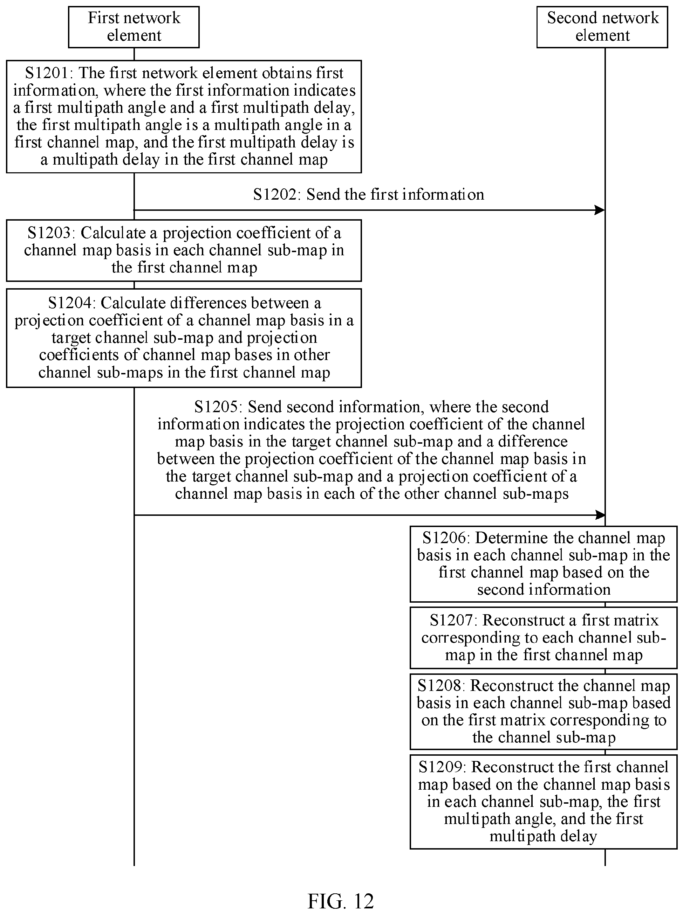

Optionally, the communication method may alternatively be shown in FIG. 12.

S1201: A first network element obtains first information, where the first information indicates a first multipath angle and a first multipath delay, the first multipath angle is a multipath angle in a first channel map, and the first multipath delay is a multipath delay in the first channel map.

In the method, for S1201, refer to S801. Details are not described herein again.

S1202: The first network element sends the first information to a second network element. Correspondingly, the second network element receives the first information.

S1203: The first network element calculates a projection coefficient of a channel map basis in each channel sub-map in the first channel map.

In the method, for a method for calculating the projection coefficient of the channel map basis in each channel sub-map, refer to the method for calculating the first projection coefficient in the foregoing embodiment. Details are not described herein again.

S1204: The first network element calculates a difference between a projection coefficient of a channel map basis in a target channel sub-map and a projection coefficient of a channel map basis in each of other channel sub-maps in the first channel map.

In the method, the target channel sub-map may be any channel sub-map in the first channel map. The other channel sub-maps may include all channel sub-maps in the first channel map other than the target channel sub-map.

FIG. 9 is used as an example. Assuming that the target channel sub-map may be a channel sub-map 1 corresponding to a grid 0, the other channel sub-maps may include a channel sub-map 2 corresponding to a grid 1, a channel sub-map 3 corresponding to a grid 2, a channel sub-map 4 corresponding to a grid 3, and a channel sub-map 5 corresponding to a grid 4.

The first network element may calculate a first difference between a projection coefficient of a channel map basis in the channel sub-map 2 and a projection coefficient of a channel map basis in the channel sub-map 1, a second difference between a projection coefficient of a channel map basis in the channel sub-map 3 and the projection coefficient of the channel map basis in the channel sub-map 1, a third difference between a projection coefficient of a channel map basis in the channel sub-map 4 and the projection coefficient of the channel map basis in the channel sub-map 1, and a fourth difference between a projection coefficient of a channel map basis in the channel sub-map 5 and the projection coefficient of the channel map basis in the channel sub-map 1.

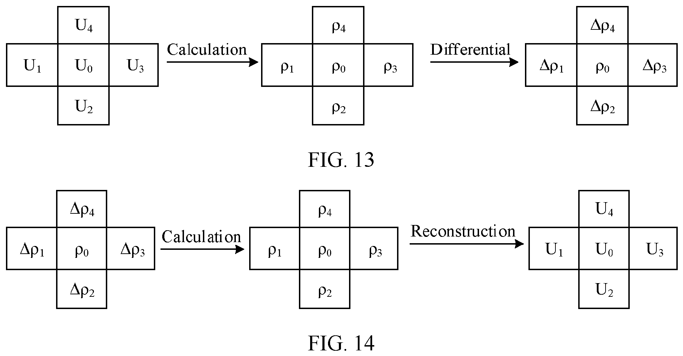

As shown in FIG. 13, Δ*ρ*₁ may represent the first difference, Δ*ρ*₂ may represent the second difference, Δ*ρ*₃ may represent the third difference, and Δ*ρ*₄ may represent the fourth difference.

S1205: The first network element sends second information to the second network element, where the second information indicates the projection coefficient of the channel map basis in the target channel sub-map and the difference between the projection coefficient of the channel map basis in the target channel sub-map and the projection coefficient of the channel map basis in each of the other channel sub-maps. Correspondingly, the second network element receives the second information.

FIG. 13 is used as an example. In an implementation, the second information may include the projection coefficient of the channel map basis in the target channel sub-map, the first difference, the second difference, the third difference, and the fourth difference.

Optionally, in another implementation, the second information may include the projection coefficient of the channel map basis in the target channel sub-map, a non-zero value in the first difference, an index of the non-zero value in the first difference, a non-zero value in the second difference, an index of the non-zero value in the second difference, a non-zero value in the third difference, an index of the non-zero value in the third difference, a non-zero value in the fourth difference, and an index of the non-zero value in the fourth difference.

S1206: The second network element determines the channel map basis in each channel sub-map in the first channel map based on the second information.

In an implementation, when the second information includes the projection coefficient of the channel map basis in the target channel sub-map, the first difference, the second difference, the third difference, and the fourth difference, the second network element may determine the projection coefficient of the channel map basis in the channel sub-map 2 based on the projection coefficient of the channel map basis in the target channel sub-map and the first difference, determine the projection coefficient of the channel map basis in the channel sub-map 3 based on the projection coefficient of the channel map basis in the target channel sub-map and the second difference, determine the projection coefficient of the channel map basis in the channel sub-map 4 based on the projection coefficient of the channel map basis in the target channel sub-map and the third difference, and determine the projection coefficient of the channel map basis in the channel sub-map 5 based on the projection coefficient of the channel map basis in the target channel sub-map and the fourth difference.

Optionally, in another implementation, when the second information includes the projection coefficient of the channel map basis in the target channel sub-map, the non-zero value in the first difference, the index of the non-zero value in the first difference, the non-zero value in the second difference, the index of the non-zero value in the second difference, the non-zero value in the third difference, the index of the non-zero value in the third difference, the non-zero value in the fourth difference, and the index of the non-zero value in the fourth difference, the second network element may first determine the first difference based on the non-zero value in the first difference and the index of the non-zero value in the first difference, determine the second difference based on the non-zero value in the second difference and the index of the non-zero value in the second difference, determine the third difference based on the non-zero value in the third difference and the index of the non-zero value in the third difference, and determine the fourth difference based on the non-zero value in the fourth difference and the index of the non-zero value in the fourth difference; and then determine the projection coefficient of the channel map basis in the channel sub-map 2, the projection coefficient of the channel map basis in the channel sub-map 3, the projection coefficient of the channel map basis in the channel sub-map 4, and the projection coefficient of the channel map basis in the channel sub-map 5 based on the projection coefficient of the channel map basis in the target channel sub-map, the first difference, the second difference, the third difference, and the fourth difference.

Optionally, the second information may further include an index of each channel sub-map in the first channel map.

Optionally, the first network element may further send third information to the second network element, where the third information indicates an arrangement manner of a base station array and a quantity of subcarriers. Correspondingly, the second network element may receive the third information.

S1207: The second network element reconstructs a first matrix corresponding to each channel sub-map in the first channel map.

In the method, for S1207, refer to S805. Details are not described herein again.

S1208: The second network element reconstructs the channel map basis in each channel sub-map based on the first matrix corresponding to the channel sub-map.

In the method, for S1208, refer to S806. Details are not described herein again.

S1209: The second network element reconstructs the first channel map based on the channel map basis in each channel sub-map, the first multipath angle, and the first multipath delay.

In the method, for S1209, refer to S807. Details are not described herein again.

Optionally, a method in which the second network element reconstructs the first channel map may be shown in FIG. 14.

Optionally, in some embodiments, S1202 may alternatively be performed after S1203, S1204, or S1205.

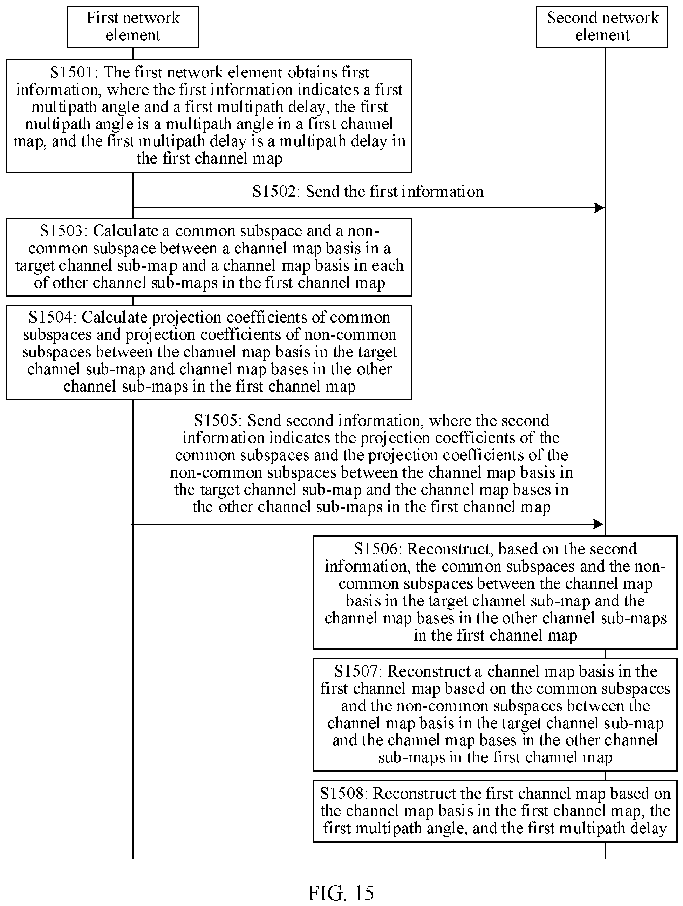

Optionally, the communication method may alternatively be shown in FIG. 15.

S1501: A first network element obtains first information, where the first information indicates a first multipath angle and a first multipath delay, the first multipath angle is a multipath angle in a first channel map, and the first multipath delay is a multipath delay in the first channel map.

In the method, for S1501, refer to S801. Details are not described herein again.

S1502: The first network element sends the first information to a second network element. Correspondingly, the second network element receives the first information.

S1503: The first network element calculates a common subspace and a non-common subspace between a channel map basis in a target channel sub-map and a channel map basis in each of other channel sub-maps in the first channel map.

In the method, the target channel sub-map may be any channel sub-map in the first channel map. The other channel sub-maps may include each channel sub-map in the first channel map other than the target channel sub-map.

FIG. 9 is used as an example. Assuming that the target channel sub-map may be a channel sub-map 1 corresponding to a grid 0, the other channel sub-maps may include a channel sub-map 2 corresponding to a grid 1, a channel sub-map 3 corresponding to a grid 2, a channel sub-map 4 corresponding to a grid 3, and a channel sub-map 5 corresponding to a grid 4.

The first network element may calculate a first common subspace between a channel map basis in the channel sub-map 2 and a channel map basis in the channel sub-map 1, and then determine a non-common subspace of the channel map basis in the channel sub-map 2 based on the first common subspace.

For a method for calculating the first common subspace, refer to the process of calculating ***v***₀₁ in the foregoing embodiment. Details are not described herein again.

A direct sum of the non-common subspace of the channel map basis in the channel sub-map 2 and the first common subspace is equal to the channel map basis in the channel sub-map 2.

In addition, the first network element may calculate a second common subspace between a channel map basis in the channel sub-map 3 and the channel map basis in the channel sub-map 1, and then determine a non-common subspace of the channel map basis in the channel sub-map 3 based on the second common subspace.

The first network element may calculate a third common subspace between a channel map basis in the channel sub-map 4 and the channel map basis in the channel sub-map 1, and then determine a non-common subspace of the channel map basis in the channel sub-map 4 based on the third common subspace.

The first network element may calculate a fourth common subspace between a channel map basis in the channel sub-map 5 and the channel map basis in the channel sub-map 1, and then determine a non-common subspace of the channel sub-map 5 based on the fourth common subspace.

Optionally, a non-common subspace of the channel map basis in the channel sub-map 1 may be determined based on a common subspace between the channel map basis in the channel sub-map 1 and a channel map basis in any one of other channel sub-maps.

For example, the non-common subspace of the channel map basis in the channel sub-map 1 may be determined based on the first common subspace. In this example, a direct sum of the non-common subspace of the channel map basis in the channel sub-map 1 and the first common subspace is equal to the channel map basis in the channel sub-map 1.

S1504: The first network element calculates projection coefficients of common subspaces and projection coefficients of non-common subspaces between the channel map basis in the target channel sub-map and channel map bases in the other channel sub-maps in the first channel map.

In the method, the first network element may calculate a projection coefficient of the first common subspace, a projection coefficient of the second common subspace, a projection coefficient of the third common subspace, and a projection coefficient of the fourth common subspace.

In addition, the first network element may further calculate a projection coefficient of a non-common subspace of the channel map basis in each channel sub-map.

For a method for calculating projection coefficients of each common subspace and each non-common subspace, refer to Formula (1). Details are not described herein again.

In the method, a method in which the first network element calculates the projection coefficients of the common subspaces and the projection coefficients of the non-common subspaces between the channel map basis in the target channel sub-map and the channel map bases in the other channel sub-maps in the first channel map may be shown in FIG. 15.

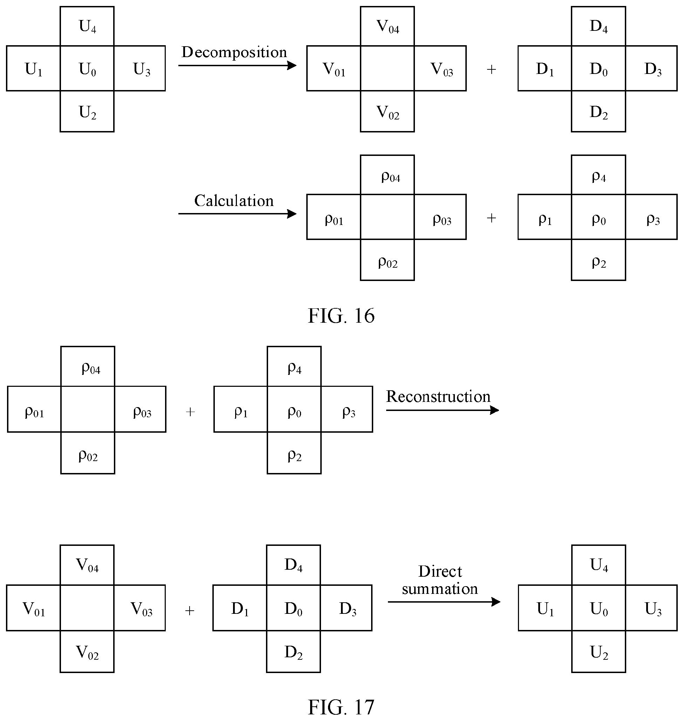

As shown in FIG. 16, it is assumed that ***V***₀₁ represents the first common subspace, ***V***₀₂ represents the second common subspace, ***V***₀₃ represents the third common subspace, and ***V***₀₄ represents the fourth common subspace. ***D***₀ represents the non-common subspace of the channel sub-map 1, ***D***₁ represents the non-common subspace of the channel sub-map 2, ***D***₂ represents the non-common subspace of the channel sub-map 3, ***D***₃ represents the non-common subspace of the channel sub-map 4, and ***D***₄ represents the non-common subspace of the channel sub-map 5.

*ρ*₀₁ represents the projection coefficient of the first common subspace, *ρ*₀₂ represents the projection coefficient of the second common subspace, *ρ*₀₃ represents the projection coefficient of the third common subspace, and *ρ*₀₄ represents the projection coefficient of the fourth common subspace. *ρ*₀ represents a projection coefficient of the non-common subspace of the channel sub-map 1, *ρ*₁ represents a projection coefficient of the non-common subspace of the channel sub-map 2, *ρ*₂ represents a projection coefficient of the non-common subspace of the channel sub-map 3, *ρ*₃ represents a projection coefficient of the non-common subspace of the channel sub-map 4, and *ρ*₄ represents a projection coefficient of the non-common subspace of the channel sub-map 5.

S1505: The first network element sends second information to the second network element, where the second information indicates the projection coefficients of the common subspaces and the projection coefficients of the non-common subspaces between the channel map basis in the target channel sub-map and the channel map bases in the other channel sub-maps in the first channel map. Correspondingly, the second network element receives the second information.

In an implementation, the second information may include the projection coefficients of the common subspaces and the projection coefficients of the non-common subspaces between the channel map basis in the target channel sub-map and the channel map bases in the other channel sub-maps in the first channel map.

In another implementation, the second information may include non-zero values and indexes of the non-zero values in the projection coefficients of the common subspaces, and non-zero values and indexes of the non-zero values in the projection coefficients of the non-common subspaces, where the common subspaces and the non-common subspaces are between the channel map basis in the target channel sub-map and the channel map bases in the other channel sub-maps in the first channel map.

S1506: The second network element reconstructs, based on the second information, the common subspaces and the non-common subspaces between the channel map basis in the target channel sub-map and the channel map bases in the other channel sub-maps in the first channel map.

In a possible implementation, when the second information includes the projection coefficients of the common subspaces and the projection coefficients of the non-common subspaces between the channel map basis in the target channel sub-map and the channel map bases in the other channel sub-maps in the first channel map, the second network element may calculate each common subspace based on the projection coefficient of each common subspace, and calculate each non-common subspace based on the projection coefficient of each non-common subspace.

In the method, for a method for calculating each common subspace and each non-common subspace, refer to Formula (7) and Formula (8). Details are not described herein again.

In another possible implementation, when the second information includes the non-zero values and the indexes of the non-zero values in the projection coefficients of the common subspaces, and the non-zero values and the indexes of the non-zero values in the projection coefficients of the non-common subspaces, where the common subspaces and the non-common subspaces are between the channel map basis in the target channel sub-map and the channel map bases in the other channel sub-maps in the first channel map, the second network element may first determine the projection coefficient of each common subspace based on a non-zero value in the projection coefficient of each common subspace and an index of the non-zero value, and determine the projection coefficient of each non-common subspace based on a non-zero value in the projection coefficient of each non-common subspace and an index of the non-zero value; and then calculate each common subspace based on the projection coefficient of each common subspace, and calculate each non-common subspace based on the projection coefficient of each non-common subspace.

S1507: The second network element reconstructs a channel map basis in the first channel map based on the common subspaces and the non-common subspaces between the channel map basis in the target channel sub-map and the channel map bases in the other channel sub-maps in the first channel map.

In the method, the second network element may reconstruct the channel map basis in the channel sub-map 2 based on the first common subspace and the non-common subspace of the channel map basis in the channel sub-map 2.

The channel map basis in the channel sub-map 2 is equal to the direct sum of the first common subspace and the non-common subspace of the channel map basis in the channel sub-map 2.

In an example, it is assumed that ***Ṽ***₀₁ represents the first common subspace calculated by the second network element, ***D̃***₁ represents the non-common subspace, calculated by the second network element, of the channel map basis in the channel sub-map 2, and the channel map basis in the channel sub-map 2 reconstructed by the second network element is ***Ũ***₁. In this case, ***Ũ***₁, ***D̃***₁, and ***Ṽ***₀₁ may satisfy: ***Ũ***₁ = ***D̃***₁ ⊕ ***Ṽ***₀₁.

In addition, the second network element may reconstruct the channel map basis in the channel sub-map 3 based on the second common subspace and the non-common subspace of the channel map basis in the channel sub-map 3.

The second network element may reconstruct the channel map basis in the channel sub-map 4 based on the third common subspace and the non-common subspace of the channel map basis in the channel sub-map 4.

The second network element may reconstruct the channel map basis in the channel sub-map 5 based on the fourth common subspace and the non-common subspace of the channel map basis in the channel sub-map 5.

Optionally, the second network element may reconstruct the channel map basis in the channel sub-map 1 based on any common subspace.

In an example, when the first network element determines the non-common subspace of the channel map basis in the channel sub-map 1 based on the first common subspace, the second network element may reconstruct the channel map basis in the channel sub-map 1 based on the first common subspace. The channel map basis in the channel sub-map 1 may be equal to the direct sum of the first common subspace and the non-common subspace of the channel map basis in the channel sub-map 1.

Optionally, in this example, the first network element may further send indication information to the second network element, where the indication information indicates that the first network element determines the non-common subspace of the channel map basis in the channel sub-map 1 based on the first common subspace. Correspondingly, after receiving the indication information, the second network element may reconstruct the channel map basis in the channel sub-map 1 based on the calculated first common subspace.

S1508: The second network element reconstructs the first channel map based on the channel map basis in the first channel map, the first multipath angle, and the first multipath delay.

In the method, after obtaining the projection coefficients of the common subspace and the non-common subspace of the channel map basis in each channel sub-map, the second network element may first reconstruct each channel sub-map based on the channel map basis in each channel sub-map, the first multipath angle, and the first multipath delay, and then integrate all channel sub-maps into the first channel map based on indexes of all the channel sub-maps.

Optionally, a method in which the second network element reconstructs the first channel map may be shown in FIG. 17.

Optionally, in some embodiments, S1502 may alternatively be performed after S1503, S1504, or S1505.

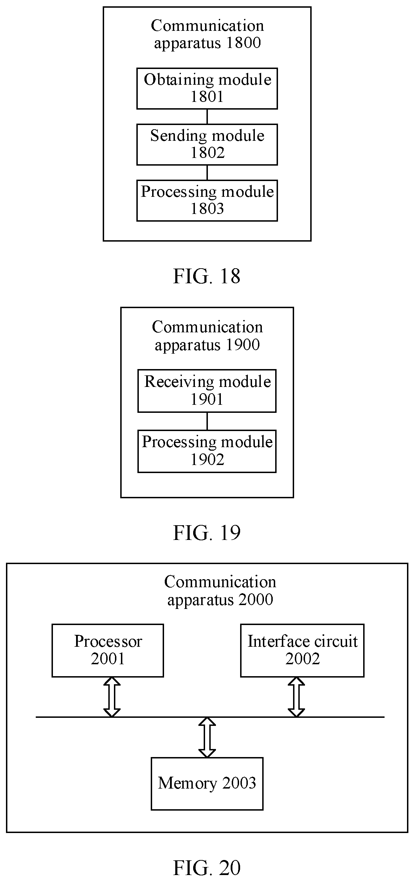

FIG. 18 is a diagram of a communication apparatus according to an embodiment of this application. As shown in FIG. 18, the communication apparatus 1800 may include an obtaining module 1801 and a sending module 1802.

In an example, the communication apparatus 1800 may be configured to implement the method in the embodiment shown in FIG. 5. The obtaining module 1801 may be configured to perform S501, and the sending module 1802 may be configured to perform S502 and S503.

Optionally, the communication apparatus 1800 may further include a processing module 1803.

In another example, the communication apparatus 1800 may be configured to implement the method in the embodiment shown in FIG. 8. The obtaining module 1801 may be configured to perform S801, the sending module 1802 may be configured to perform S802 and S804, and the processing module 1803 may be configured to perform S803.

In still another example, the communication apparatus 1800 may be configured to implement the method in the embodiment shown in FIG. 12. The obtaining module 1801 may be configured to perform S1201, the sending module 1802 may be configured to perform S1202 and S1205, and the processing module 1803 may be configured to perform S1203 and S1204.

In still another example, the communication apparatus 1800 may be configured to implement the method in the embodiment shown in FIG. 15. The obtaining module 1801 may be configured to perform S1501, the sending module 1802 may be configured to perform S1502 and S1505, and the processing module 1803 may be configured to perform S1503 and S1504.

Optionally, the communication apparatus 1800 may be used in a first network element, or may be used in a chip in the first network element.

FIG. 19 is a diagram of a communication apparatus according to another embodiment of this application. As shown in FIG. 19, the communication apparatus 1900 may include a receiving module 1901 and a processing module 1902.

In an example, the communication apparatus 1900 may be configured to implement the method in the embodiment shown in FIG. 5. The receiving module 1901 may be configured to perform S502 and S503, and the processing module 1902 may be configured to perform S504 and S505.

In another example, the communication apparatus 1900 may be configured to implement the method in the embodiment shown in FIG. 8. The receiving module 1901 may be configured to perform S802 and S804, and the processing module 1902 may be configured to perform S805 to S807.

In still another example, the communication apparatus 1900 may be configured to implement the method in the embodiment shown in FIG. 12. The receiving module 1901 may be configured to perform S1202 and S1205, and the processing module 1902 may be configured to perform S1206 to S1209.

In still another example, the communication apparatus 1900 may be configured to implement the method in the embodiment shown in FIG. 15. The receiving module 1901 may be configured to perform S1502 and S1505, and the processing module 1902 may be configured to perform S1506 to S1508.

Optionally, the communication apparatus 1900 may be used in a second network element, or may be used in a chip in the second network element.

FIG. 20 is a diagram of a communication apparatus according to still another embodiment of this application. As shown in FIG. 20, the communication apparatus 2000 includes a processor 2001 and an interface circuit 2002. The processor 2001 and the interface circuit 2002 are coupled to each other. It may be understood that the interface circuit 2002 may be a transceiver or an input/output interface. Optionally, the communication apparatus 2000 may further include a memory 2003, configured to store instructions executed by the processor 2001, store input data required by the processor 2001 to run the instructions, or store data generated after the processor 2001 runs the instructions.

In an example, the processor 2001 may be configured to implement functions of the processing module 1803, and the interface circuit 2002 may be configured to implement functions of the obtaining module 1801 and the sending module 1802.

In another example, the processor 2001 may be configured to implement functions of the processing module 1902, and the interface circuit 2002 may be configured to implement functions of the receiving module 1901.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in the network device or the terminal device as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise specified or there is a logic conflict, terms and/or descriptions of different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first network element, wherein the method comprises:
obtaining a first channel map, wherein the first channel map comprises a first channel sub-map and a second channel sub-map, a multipath angle in the first channel sub-map and a multipath angle in the second channel sub-map are equal to a first multipath angle, the first multipath angle is a multipath angle in the first channel map, a multipath delay in the first channel sub-map and a multipath delay in the second channel sub-map are equal to a first multipath delay, and the first multipath delay is a multipath delay in the first channel map;
sending first information, wherein the first information indicates the first multipath angle and/or the first multipath delay; and
sending second information, wherein the second information indicates a first projection coefficient and a second projection coefficient, the first projection coefficient is a projection coefficient of a channel map basis in the first channel sub-map, and the second projection coefficient is a projection coefficient of a channel map basis in the second channel sub-map.

2. The method according to claim 1, wherein that the second information indicates the first projection coefficient comprises: the second information comprises a non-zero value in the first projection coefficient and an index of the non-zero value in the first projection coefficient.

3. The method according to claim 2, wherein that the second information indicates the second projection coefficient comprises: the second information further comprises a non-zero value in the second projection coefficient and an index of the non-zero value in the second projection coefficient.

4. The method according to claim 2, wherein that the second information indicates the second projection coefficient comprises: the second information further comprises a non-zero value in a difference between the second projection coefficient and the first projection coefficient and an index of the non-zero value in the difference.

5. The method according to claim 1, wherein the channel map basis in the first channel sub-map comprises a common channel map basis and/or a first non-common channel map basis, the first projection coefficient comprises a first subspace projection coefficient and/or a second subspace projection coefficient, the first subspace projection coefficient is a projection coefficient of the common channel map basis, and the second subspace projection coefficient is a projection coefficient of the first non-common channel map basis; and
the common channel map basis is a common subspace between the channel map basis in the first channel sub-map and the channel map basis in the second channel sub-map, and a direct sum of the common channel map basis and the first non-common channel map basis is equal to the channel map basis in the first channel sub-map.

6. The method according to claim 5, wherein that the second information indicates the first projection coefficient comprises: the second information comprises a non-zero value in the first subspace projection coefficient, an index of the non-zero value in the first subspace projection coefficient, a non-zero value in the second subspace projection coefficient, and an index of the non-zero value in the second subspace projection coefficient.

7. The method according to claim 6, wherein the channel map basis in the second channel sub-map comprises the common channel map basis and/or a second non-common channel map basis, the second projection coefficient comprises the first subspace projection coefficient and/or a third subspace projection coefficient, the third subspace projection coefficient is a projection coefficient of the second non-common channel map basis, and a direct sum of the common channel map basis and the second non-common channel map basis is equal to the channel map basis in the second channel sub-map; and
that the second information indicates the second projection coefficient comprises: the second information further comprises a non-zero value in the third subspace projection coefficient and an index of the non-zero value in the third subspace projection coefficient.

8. The method according to any one of claims 1 to 7, wherein the first channel sub-map is adjacent to the second channel sub-map.

9. A communication method, applied to a second network element, wherein the method comprises:
receiving first information, wherein the first information indicates a first multipath angle and/or a first multipath delay, the first multipath angle is a multipath angle in a first channel map, the first multipath angle is equal to a multipath angle in a first channel sub-map in the first channel map and a multipath angle in a second channel sub-map in the first channel map, the first multipath delay is a multipath delay in the first channel map, and the first multipath delay is equal to a multipath delay in the first channel sub-map and a multipath delay in the second channel sub-map;
receiving second information, wherein the second information indicates a first projection coefficient and a second projection coefficient, the first projection coefficient is a projection coefficient of a channel map basis in the first channel sub-map, and the second projection coefficient is a projection coefficient of a channel map basis in the second channel sub-map;
reconstructing an array vector and/or a subcarrier vector based on the first information; and
reconstructing the channel map basis in the first channel sub-map and the channel map basis in the second channel sub-map based on the second information.

10. The method according to claim 9, wherein that the second information indicates the first projection coefficient comprises: the second information comprises a non-zero value in the first projection coefficient and an index of the non-zero value in the first projection coefficient.

11. The method according to claim 10, wherein that the second information indicates the second projection coefficient comprises: the second information further comprises a non-zero value in the second projection coefficient and an index of the non-zero value in the second projection coefficient.

12. The method according to claim 10, wherein that the second information indicates the second projection coefficient comprises: the second information further comprises a non-zero value in a difference between the second projection coefficient and the first projection coefficient and an index of the non-zero value in the difference; and
the method further comprises:
determining the second projection coefficient based on the first projection coefficient, the non-zero value in the difference, and the index of the non-zero value in the difference; and
reconstructing the channel map basis in the second channel sub-map based on the second projection coefficient.

13. The method according to claim 9, wherein the channel map basis in the first channel sub-map comprises a common channel map basis and/or a first non-common channel map basis, the first projection coefficient comprises a first subspace projection coefficient and/or a second subspace projection coefficient, the first subspace projection coefficient is a projection coefficient of the common channel map basis, and the second subspace projection coefficient is a projection coefficient of the first non-common channel map basis; and
the common channel map basis is a common subspace between the channel map basis in the first channel sub-map and the channel map basis in the second channel sub-map, and a direct sum of the common channel map basis and the first non-common channel map basis is equal to the channel map basis in the first channel sub-map.

14. The method according to claim 13, wherein that the second information indicates the first projection coefficient comprises: the second information comprises a non-zero value in the first subspace projection coefficient, an index of the non-zero value in the first subspace projection coefficient, a non-zero value in the second subspace projection coefficient, and an index of the non-zero value in the second subspace projection coefficient; and
the reconstructing the channel map basis in the first channel sub-map based on the second information comprises:
determining the first subspace projection coefficient based on the non-zero value in the first subspace projection coefficient and the index of the non-zero value in the first subspace projection coefficient;
reconstructing the common channel map basis based on the first subspace projection coefficient;
determining the second subspace projection coefficient based on the non-zero value in the second subspace projection coefficient and the index of the non-zero value in the second subspace projection coefficient;
reconstructing the first non-common channel map basis based on the second subspace projection coefficient; and
determining the channel map basis in the first channel sub-map based on the common channel map basis and the first non-common channel map basis.

15. The method according to claim 14, wherein the channel map basis in the second channel sub-map comprises the common channel map basis and/or a second non-common channel map basis, the second projection coefficient comprises the first subspace projection coefficient and/or a third subspace projection coefficient, the third subspace projection coefficient is a projection coefficient of the second non-common channel map basis, and a direct sum of the common channel map basis and the second non-common channel map basis is equal to the channel map basis in the second channel sub-map;
that the second information indicates the second projection coefficient comprises: the second information further comprises a non-zero value in the third subspace projection coefficient and an index of the non-zero value in the third subspace projection coefficient; and
the reconstructing the channel map basis in the second channel sub-map based on the second information comprises:
determining the third subspace projection coefficient based on the non-zero value in the third subspace projection coefficient and the index of the non-zero value in the third subspace projection coefficient;
reconstructing the second non-common channel map basis based on the third subspace projection coefficient; and
determining the channel map basis in the second channel sub-map based on the common channel map basis and the second non-common channel map basis.

16. The method according to any one of claims 9 to 15, wherein the first channel sub-map is adjacent to the second channel sub-map.

17. A communication apparatus, comprising a functional module configured to implement the method according to any one of claims 1 to 16.

18. A communication apparatus, comprising a memory and a processor, wherein
the memory is configured to store program instructions; and
the processor is configured to execute the program instructions in the memory to implement the method according to any one of claims 1 to 16.

19. A computer-readable storage medium, wherein the computer-readable storage medium stores program code to be executed by a computer, and the program code comprises instructions for implementing the method according to any one of claims 1 to 16.

20. A computer program product, wherein the computer program product comprises instructions for implementing the method according to any one of claims 1 to 16.
